# EUROPEAN PATENT SPECIFICATION

(11) **EP 4 124 819 B1**
(45) Date of publication and mention of the grant of the patent: **24.01.2024**
(21) Application number: 22186920.9
(22) Date of filing: 26.07.2022
(51) Int. Cl.: F28D 20/00

(54) **THERMAL EXCHANGE SYSTEM FOR HEATING OR COOLING A FLUID AND FOR THE THERMAL STRATIFICATION OF SAID FLUID AND RELATED METHOD FOR THE THERMAL STRATIFICATION OF A FLUID**
WÄRMEAUSTAUSCHSYSTEM ZUM ERWÄRMEN ODER KÜHLEN EINES FLÜSSIGKEITS UND ZUR WÄRMESCHICHTUNG DES FLÜSSIGKEITS UND ZUGEHÖRIGES VERFAHREN ZUR WÄRMESCHICHTUNG EINES FLÜSSIGKEITS
SYSTEME D'ECHANGE THERMIQUE POUR LE CHAUFFAGE OU LE REFROIDISSEMENT D'UN FLUIDE ET POUR LA STRATIFICATION THERMIQUE DUDIT FLUIDE ET PROCEDE ASSOCIE POUR LA STRATIFICATION THERMIQUE D'UN FLUIDE

(30) Priority: 26.07.2021 IT 202100019859
(43) Date of publication of application: 01.02.2023
(73) Proprietor: Cordivari S.r.l., 64020 Morro D'Oro (TE) (IT)
(72) Inventor: BONOLIS, Alessandro, 64100 TERAMO (TE) (IT)
(74) Representative: Mulas, Chiara

(56) References cited:
- EP-A1- 2 354 680
- WO-A1-2005/071322
- DE-A1- 3 403 859
- DE-A1- 19 846 364
- DE-U1-202005 006 282
- KR-A- 20110 009 100

## Description

The present invention concerns a thermal exchange system for heating or cooling a fluid and for the thermal stratification of said fluid.

Specifically, the present invention concerns a thermal exchange system for heating or cooling a fluid and for the thermal stratification of said fluid, in particular sanitary water, inside an accumulation tank. Furthermore, the present invention concerns a method for heating or cooling such fluid.

By thermal stratification, it is meant the natural tendency of a fluid to increasingly "stratify", inside a container, for example a tank, its temperature from the lowest to the highest level and with high temperature gradients between the upper part, which is warmer, and the lower part, which is colder.

The present invention therefore belongs to the field of thermohydraulics and in particular of pressure tanks, or "closed vessel tanks", adapted to contain a heated fluid.

According to the state of the art, there are thermal stratification systems of the fluid contained in closed vessel tanks, which use dedicated pipes and thermal exchangers configured so as to introduce the heated or cooled fluid at different heights of the tank, in such a way that it has the same temperature as the fluid already contained in the tank, in order to avoid mixing and turbulences inside said tanks.

However, such known systems require the fluid to be introduced into said tank in such a way that its thermal stratification is preserved, as said fluid, following the thermal exchange, could be in different and variable conditions of flow rate and temperature. Therefore, if such conditions are not regulated, the introduction of the fluid into the tank does not allow to preserve the thermal stratification inside the tank. Such systems therefore require specially designed thermal exchange systems and piping and circuits external or internal to the tank.

Furthermore, the state-of-the-art systems for thermal stratification of the fluid contained in closed vessel tanks are designed to achieve heating and preserve the stratification inside the tank, but do not contemplate other factors such as the rapidity of availability of fluid heated at the desired temperature or the generator efficiency (in particular if it is a heat pump generator).

In fact, these two factors are in contrast with each other, because the heating or cooling rapidity requires that the fluid be rapidly brought to the desired temperature, while the efficiency of thermal generation systems based on refrigeration cycles increases if the heating or cooling process is gradually increasing, entailing a long time to bring the entire accumulation volume to the desired temperature.

To solve, at least in part, the state-of-the-art drawbacks, the applicant proposed, with the Italian patent application n. 102015000086848, a system that increases the speed of availability of fluid heated at the desired temperature, by using a thermostatic valve.

However, such system still fails to maximise the efficiency of heat pumps.

Other relevant state-of-the-art systems for thermal stratification of the fluid contained in closed vessel tanks are described in the following patent documents: WO 2005/071322 A1, EP 2 354 680 A1, KR 2011 0009100 A,

DE 34 03 859 A1, and DE 198 46 364 A1. WO-A-2005/071322 discloses a thermal exchange system according to the preamble of claim 1.

The aim of the present invention is to overcome the drawbacks of the state-of-the-art systems.

In particular, the aim of the present invention is to provide a thermal exchange system for the thermal exchange and the thermal stratification of a fluid contained in a tank which simultaneously allows to have the fluid at the desired temperature in a short time and to gradually carry out such heating or cooling, in order to preserve the efficiency of the heat pump generator.

A further aim of the present invention is to provide a thermal exchange system that allows the thermal stratification of a fluid contained inside a tank and simultaneously ensures a rapid availability of said fluid at the desired temperature.

Again, an aim of the present invention is that such thermal exchange system, in the event that a heat pump generator is used, allows the thermal exchange by maximising the efficiency of such generator.

Furthermore, an aim of the present invention is that such thermal exchange system guarantees an energy saving, when compared to the state-of-the-art systems.

Finally, an aim of the present invention is that such heat exchange system allows to make the best use of also the discontinuous or limited heat sources, such as for example the solar thermal, which depends on the weather conditions.

It is therefore the object of the present invention a thermal exchange system for the thermal stratification of a secondary fluid inside a tank, said thermal exchange system comprising: a tank for said secondary fluid having two end walls, which are opposite to each other, at least two end portions being provided inside said tank, of which a first end portion is at a first end wall of said two end walls, a second end portion is at a second end wall of said two end walls and at least one intermediate portion is arranged at an intermediate height of said tank such as to split said tank into at least two volumes, of which a first volume is comprised between said first end portion and said intermediate portion and a second volume is comprised between said second end portion and said intermediate portion; a thermal exchanger for heating or cooling said secondary fluid, and a secondary circuit, for circulating said secondary fluid from said tank to said thermal exchanger and vice versa, wherein said secondary circuit comprises: at least one withdrawal portion in fluidic connection with said tank, for withdrawing said secondary fluid contained in said tank, at least one intermediate intake portion, in fluidic connection with said tank at said intermediate height, for introducing said secondary fluid into said tank, a thermal exchange portion, comprising an inlet in fluidic connection with said at least one withdrawal portion and an outlet in fluidic connection with said intermediate inlet portion, said thermal exchange portion being adapted to carry out a thermal exchange with said thermal exchanger, for heating or cooling said secondary fluid, temperature detecting means, arranged in said tank at a detecting height, preferably at said intermediate portion, and flow control means inside said secondary circuit, said flow control means being configured for acting on said secondary circuit according to the temperature detected by said temperature detecting means for changing from a first configuration for the stratified heating or cooling of said secondary fluid in said first volume to a second configuration for the stratified heating or cooling of said secondary fluid in said second volume, wherein said secondary circuit further comprises a first internal duct which fluidically connects said thermal exchange portion with said intermediate intake portion, said first internal duct being arranged inside said tank, going from a first end wall of said tank and ending at said intermediate height.

Also described herein is a thermal exchange system for the thermal stratification of a secondary fluid inside a tank, said thermal exchange system comprising: a tank for said secondary fluid having at least two end portions, including a first end portion, a second end portion opposite to said first end portion and at least one intermediate portion which is arranged at an intermediate height of said tank such as to split said tank into at least two volumes, of which a first volume is comprised between said first end portion and said intermediate portion and a second volume is comprised between said second end portion and said intermediate portion; a thermal exchanger for heating or cooling said secondary fluid, and a secondary circuit, for circulating said secondary fluid from said tank towards said thermal exchanger and vice versa, wherein said secondary circuit comprises: at least one withdrawal portion in fluidic connection with said tank, for withdrawing said secondary fluid contained in said tank, at least one intermediate intake portion, in fluidic connection with said tank at said intermediate height, for introducing said secondary fluid into said tank, a thermal exchange portion, comprising an inlet in fluidic connection with said at least one withdrawal portion and an outlet in fluidic connection with said intermediate intake portion, said thermal exchange portion being adapted to carry out a thermal exchange with said thermal exchanger, for heating or cooling said secondary fluid, temperature detecting means, arranged in said tank at a detecting height, preferably at said intermediate portion, and flow control means inside said secondary circuit, said flow control means being configured for acting on said secondary circuit according to the temperature detected by said temperature detecting means for changing from a first configuration for the stratified heating or cooling of said secondary fluid in said first volume to a second configuration for the stratified heating or cooling of said secondary fluid in said second volume.

In particular, according to the invention, said first volume can be an upper volume of said tank and said second volume can be a lower volume of said tank, said detecting height can coincide with said intermediate height or be higher than it, and said flow control means can be adapted for acting on said secondary circuit according to the temperature detected by said temperature detecting means for changing from a first configuration for the stratified heating of said secondary fluid in said upper volume to a second configuration for the stratified heating of said secondary fluid in said lower volume.

Alternatively, according to the invention, said first volume can be a lower volume of said tank and said second volume can be an upper volume of said tank, said first detecting height can coincide with said intermediate height or be lower than it, and said flow control means can be adapted to act on said secondary circuit according to the temperature detected by said temperature detecting means for changing from a first configuration for the stratified cooling of said secondary fluid in said lower volume to a second configuration for the stratified cooling of said secondary fluid in said upper volume.

Always according to the invention, said secondary circuit can comprise a first intake portion in fluidic connection with said tank at said first end portion of said tank, and said intermediate intake portion, and said flow control means can comprise a three-way diverting intake valve comprising an inlet in fluidic connection with the outlet of said thermal exchange portion for receiving the heated or cooled secondary fluid coming from said thermal exchanger, a first outlet for said heated or cooled secondary fluid, in fluidic connection with said first intake portion, and a second outlet for said heated or cooled secondary fluid, in fluidic connection with said intermediate intake portion, and when said circuit is in said first configuration, said three-way diverting intake valve can have said inlet open, said first outlet open and said second outlet closed and when said circuit is in said second configuration, said three-way diverting intake valve can have said inlet open, said first outlet closed and said second outlet open.

Preferably according to the invention, said secondary circuit can further comprise a second internal duct arranged inside said tank and ending at said first end wall, said second internal duct fluidically connecting said second end portion of said tank with said thermal exchange portion.

In particular, according to the invention, said second internal duct can fluidically connect said second end portion of said tank with said outlet of said thermal exchange portion.

Alternatively, according to the invention, said second internal duct can fluidically connect said second end portion of said tank with said inlet of said thermal exchange portion.

More specifically, according to the invention, said first intake portion can be in fluidic connection with said second end portion of said tank through said second internal duct.

Still according to the invention, said secondary circuit can comprise a first withdrawal portion, in fluidic connection with said tank, preferably through said first internal duct, at said intermediate portion; and a second withdrawal portion, in fluidic connection with said tank at said second end portion of said tank, said flow control means may comprise a three-way diverting withdrawal valve comprising a first inlet in fluidic connection with said first withdrawal portion, a second inlet in fluidic connection with said second withdrawal portion, and an outlet in fluidic connection with the inlet of said thermal exchange portion, and when said circuit is in said first configuration, said three-way diverting withdrawal valve can have said outlet open, said first inlet open and said second inlet closed and when said circuit is in said second configuration, said three-way diverting withdrawal valve can have said outlet open, said first inlet closed and said second inlet open.

In particular, according to the invention, said second withdrawal portion can be in fluidic connection with said second end portion of said tank through said second internal duct.

More specifically, according to the invention, said first internal duct can fluidically connect said intermediate portion of said tank also with said first withdrawal portion.

Preferably according to the invention, said secondary circuit can comprise only one withdrawal portion arranged at said end portion, at least one recirculating portion for the recirculation of said secondary fluid between the outlet of said thermal exchange portion and the inlet of said thermal exchange portion; and further temperature detecting means, for detecting the temperature of said secondary fluid exiting from said thermal exchange portion, said further temperature detecting means being configured so that, when said secondary circuit is in said first configuration, said secondary fluid exiting from said thermal exchange portion can be sent, at least in part, towards said inlet of said thermal exchange portion, passing through said recirculating portion, according to the temperature detected by said further temperature detecting means.

In particular, according to the invention, said flow control means can comprise a three-way mixing valve, said recirculating portion can be in fluidic connection with said first intake portion, said flow control means can control the fluid flow from said thermal exchange portion towards said inlet and recirculating portions (47), and said first intake portion may comprise a non-return valve downstream of the connection with said recirculating portion for preventing the withdrawal of secondary fluid from said tank, and said three-way mixing valve can comprise a first inlet in fluidic connection with said recirculating portion, a second inlet in fluidic connection with said withdrawal portion, and an outlet in fluidic connection with the inlet of said thermal exchange portion, and when said secondary circuit is in said first configuration, said three-way mixing valve can be configured for fully or partially opening said first inlet and for fully or partially closing said second inlet proportionally to the opening of said first inlet and vice versa, according to the temperature detected by said further temperature detecting means, so as to mix said secondary fluid coming from said withdrawal portion with said heated secondary fluid coming from said recirculating portion; and when said secondary circuit is in said second configuration, said recirculating and intake portions are closed by the action of said flow control means and by said non-return valve which prevents the secondary fluid from flowing from said tank towards said first inlet, so as to prevent the fluid from entering said three-way mixing valve through said first inlet.

More particularly, according to the invention, said secondary circuit can comprise a bypass valve in fluidic connection with said withdrawal portion and the inlet of said thermal exchange portion and when said secondary circuit is in said first configuration said bypass valve can be closed so that said secondary fluid cannot pass through it, and when said secondary circuit is in said second configuration said bypass valve can be opened so that said secondary fluid can pass through it bypassing said three-way mixing valve.

Preferably according to the invention, said three-way mixing valve can be a thermostatic mixing valve, preferably of the self-operated type, or an electronic mixing valve.

Further according to the invention, said flow control means can comprise a three-way diverting withdrawal valve and a three-way mixing valve, said secondary circuit can comprise a further withdrawal portion, comprising a non-return valve, in fluidic connection between said withdrawal portion and an inlet of said three-way mixing valve, the outlet of said thermal exchange portion can be in fluidic connection with at least one intermediate intake portion, and said three-way diverting withdrawal valve may include a first inlet in fluidic connection with said withdrawal portion, a second inlet in fluidic connection with said recirculating portion, and an outlet in fluidic connection with the inlet of said thermal exchange portion; and said three-way mixing valve can comprise a first inlet in fluidic connection with said withdrawal portion through said further withdrawal portion; a second inlet in fluidic connection with the outlet of said thermal exchange portion and an outlet in fluidic connection with said recirculating portion; and when said secondary circuit is in said first configuration, said three-way diverting withdrawal valve can have said first inlet closed, said second inlet open and said outlet open, and said three-way mixing valve can have said outlet open and can be configured for fully or partially opening said first inlet and for fully or partially closing said second inlet proportionally to the opening of said first inlet and vice versa, according to the temperature detected by said further temperature detecting means, so as to mix said secondary fluid coming from said withdrawal portion with said heated secondary fluid coming from said outlet of said thermal exchange portion; and when said secondary circuit is in said second configuration, said three-way diverting withdrawal valve can have said first inlet open and said second inlet closed, so as to close said recirculating portion and to prevent the secondary fluid from flowing through said three-way mixing valve, and said non-return valve can prevent the secondary fluid from flowing through said further withdrawal portion and from being possibly recirculated from said first inlet of said mixing valve towards said first inlet of said diverting valve.

In particular, according to the invention, said single withdrawal portion can be in fluidic connection with said second end portion of said tank through said second internal duct.

Still according to the invention, said tank can be a closed vessel tank.

Always according to the invention, said thermal exchange system can comprise a first internal duct in fluidic connection with said at least one intermediate intake portion, said first internal duct being arranged inside said tank and ending at said intermediate height; and/or a second internal duct arranged inside said tank and ending at an end portion.

In particular, according to the invention, said first internal duct can also be in fluidic connection with said first withdrawal portion.

More particularly, according to the invention, said thermal exchange system can comprise diffuser means, preferably connected to the terminal end of said first internal duct, arranged in said tank in said intermediate portion at said at least one intake portion, for the diffusion and thermal stratification in said first volume of the secondary fluid introduced into said tank.

Furthermore, according to the invention, said tank can comprise at least two connections for the fluidic connection with said at least one intake portion of said secondary circuit, said at least two connections being arranged at different heights of said tank, so as to be able to vary said intermediate height of said at least one intermediate portion of said tank.

Preferably according to the invention, said tank can comprise at least two intermediate portions at respective intermediate heights, said secondary circuit can comprise temperature detecting means arranged at each intermediate height and a respective intake portion, arranged at each intermediate height, for heating or cooling said secondary fluid in said tank by means of a multiple stratification.

Furthermore, according to the invention, said thermal exchanger can comprise a primary circuit for a primary heat transfer fluid, said primary circuit being in thermal connection with said thermal exchange portion for heating or cooling said secondary fluid in said thermal exchanger.

In particular, according to the invention, said thermal exchange system can comprise a flow sensor in said primary circuit, said flow sensor being configured to detect the presence of flow of said primary heat transfer fluid in said primary circuit and to interrupt the flow of said secondary fluid in said secondary circuit in absence of flow of said primary fluid in said primary circuit.

Still according to the invention, said thermal exchange system can comprise a hydraulic pump adapted to act on said secondary circuit for circulating said secondary fluid, said hydraulic pump preferably being a hydraulic circulator.

Always according to the invention, said thermal exchanger can be connected to a thermal generator, preferably a heat pump thermal generator.

A further object of the present invention is a method for the thermal stratification of a secondary fluid inside a tank of a thermal exchange system, wherein said secondary fluid occupies at least one first volume and a second volume of said tank, said first volume and second volume being in fluidic contact with each other at an intermediate portion of said tank arranged at an intermediate height, wherein said method comprises the following steps:
A.withdrawing the secondary fluid to be heated or cooled from said tank and heating or cooling it by means of a thermal exchanger;
B. detecting the temperature of the secondary fluid in said tank at a first detecting height by means of temperature detecting means, and if the temperature of the secondary fluid at said first detecting height has not reached a first preset temperature, introducing the heated or cooled secondary fluid into said tank, so that said first volume of said secondary fluid in said tank is heated or cooled in a stratified manner;
C. detecting the temperature of the secondary fluid at said first detecting height by means of temperature detecting means, and, if the temperature of the secondary fluid at said first detecting height has reached said first preset temperature, introducing the secondary fluid into said tank at said intermediate height, so that said second volume of said secondary fluid in said tank is gradually heated or cooled in a stratified manner.

In particular, according to the invention, said method can be for heating the secondary fluid, said secondary fluid can be heated by means of said thermal exchanger; in said step B. if the temperature of the secondary fluid at said first detecting height is less than said first preset temperature, the heated secondary fluid is introduced into said tank so that said first volume of said secondary fluid in said tank is heated up to a first heating temperature, greater than or equal to said first preset temperature, said first volume being arranged above said intermediate height; and in said step C., if the temperature of the secondary fluid at said first detecting height is greater than or equal to said first preset temperature, the heated secondary fluid is introduced into said tank at said intermediate height, so that said second volume of said secondary fluid in said tank is gradually heated until a final heating temperature has been reached, said second volume being arranged below said intermediate height.

More specifically, according to the invention, said final heating temperature can be less than or equal to said first preset temperature, preferably equal to it.

Still according to the invention, in said step B. the secondary fluid can be introduced into said tank at an upper portion of said tank, preferably at the top of said tank.

Always according to the invention, said step A. may include the following sub-steps:
A1.if the temperature of said secondary fluid at said first detecting height is less than said first preset temperature, withdrawing said secondary fluid to be heated at said intermediate height; and
A2. if the temperature of said secondary fluid at said first detecting height is greater than or equal to said first preset temperature, withdrawing said secondary fluid to be heated at a lower portion of said tank, preferably at the bottom of said tank.

Preferably according to the invention, in said step A., the following sub-steps can be provided:
A3. before said step B., if the temperature of the secondary fluid heated by said thermal exchanger is less than a second preset temperature, wherein said second preset temperature is greater than or equal to said first preset temperature, said heated secondary fluid is recirculated in said thermal exchanger, and
A4. simultaneously with said step B., if the temperature of the secondary fluid heated by said thermal exchanger is greater than or equal to said second preset temperature, at least one part of said heated secondary fluid is introduced into said tank and the remaining part of said heated secondary fluid is recirculated in said thermal exchanger; and in that
A5. when the temperature of the secondary fluid at said first detecting height is greater than or equal to said first preset temperature, said heated secondary fluid is not recirculated in said thermal exchanger and it is fully introduced into said tank.

Alternatively according to the invention, said method can be for cooling said secondary fluid, wherein said secondary fluid can be cooled by means of said thermal exchanger; in said step B. if the temperature of the secondary fluid at said first detecting height is greater than said first preset temperature, the cooled secondary fluid is introduced into said tank so that said first volume of said secondary fluid in said tank is gradually cooled to a first cooling temperature, less than or equal to said first preset temperature, said first volume being arranged below said intermediate height; and in said step C., if the temperature of the secondary fluid at said first detecting height is less than or equal to said first preset temperature, the cooled secondary fluid is introduced into said tank at said intermediate height, so that said second volume of said secondary fluid in said tank is gradually cooled until a final cooling temperature has been reached, said second volume being arranged above said intermediate height.

In particular, according to the invention, said final cooling temperature can be greater than or equal to said first preset temperature, preferably equal to it.

More specifically, according to the invention, during said step B. the secondary fluid can be introduced into said tank at a lower portion of said tank, preferably at the bottom of said tank.

Still according to the invention, said step A. may include the following sub-steps:
A1. if the temperature of said secondary fluid at said first detecting height is greater than said first preset temperature, withdrawing said secondary fluid to be cooled at said intermediate height; and
A2. if the temperature of said secondary fluid at said first detecting height is less than or equal to said first preset temperature, withdrawing said secondary fluid to be cooled at an upper portion of said tank, preferably at the top of said tank.

Further according to the invention, said secondary fluid can be heated or cooled by means of a thermal exchanger comprising a primary circuit for a primary heat transfer fluid, and can comprise the following step, before said steps A. - C.:
D. checking the presence of the primary heat transfer fluid flowing in said primary circuit, and, if present, proceeding with the heating or cooling of said secondary fluid.

Finally, according to the invention, said thermal exchange system can be a thermal exchange system as described.

The invention will now be described for illustrative but not limitative purposes, with particular reference to the drawings of the attached figures, wherein:
Figure 1 shows a hydraulic diagram of a first embodiment of a thermal exchange system for the thermal stratification of a fluid, comprising a tank, connected to an exchanger through a secondary circuit provided with three-way diverting valves, used for heating the fluid;
Figure 2 shows a hydraulic diagram of a second embodiment of a thermal exchange system according to the present invention, for the thermal stratification of a fluid, comprising a tank, connected to an exchanger through a secondary circuit provided with three-way diverting valves and internal ducts for introducing and withdrawing fluid into/from said tank, used for heating the fluid;
Figure 3 shows a hydraulic diagram of a third embodiment of a thermal exchange system, for the thermal stratification of a heated fluid, comprising a tank, connected to an exchanger through a secondary circuit provided with three-way diverting valves and a three-way mixing valve;
Figure 4 shows a hydraulic diagram of a fourth embodiment of a thermal exchange system according to the invention, for the thermal stratification of a heated fluid, comprising a tank, connected to an exchanger through a secondary circuit provided with three-way diverting valves and a three-way mixing valve, and a duct inside the tank for introducing and withdrawing the fluid;
Figure 5 shows a hydraulic diagram of a fifth embodiment of the thermal exchange system used for cooling the fluid;
Figure 6 shows a hydraulic diagram of a sixth embodiment of a thermal exchange system according to the invention for cooling a fluid with ducts inside the tank for introducing and withdrawing said fluid;
Figure 7 shows a hydraulic diagram of a seventh embodiment of the thermal exchange system according to the invention used for cooling a fluid with ducts inside the tank for introducing and withdrawing said fluid;
Figure 8 shows a hydraulic diagram of an eighth embodiment of the thermal exchange system according to the invention, for the thermal stratification of a heated fluid, comprising a tank, connected to an exchanger through a secondary circuit provided with an electronic three-way mixing valve, with a three-way diverting valve and equipped with ducts inside the tank for introducing and withdrawing said fluid; and
Figure 9 shows a hydraulic diagram of a ninth embodiment of the thermal exchange system according to the invention, for the thermal stratification of a heated fluid, comprising a tank, connected to an exchanger through a secondary circuit provided with three-way diverting valves and a three-way mixing valve, and provided with ducts inside the tank for introducing and withdrawing said fluid.

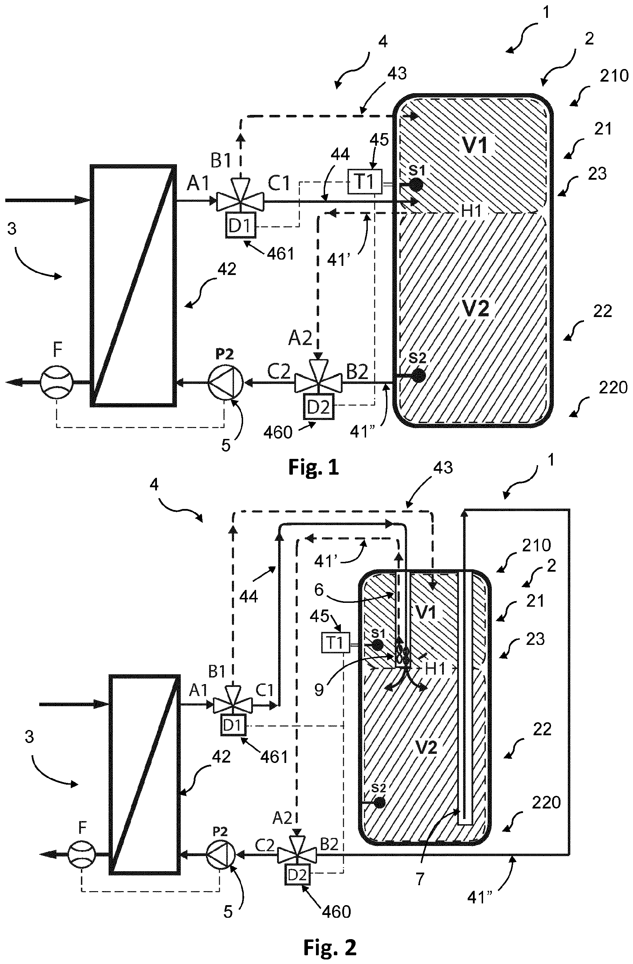

Referring in particular to Figures 1 - 9, the numerical reference 1 will be assigned to a thermal exchange system 1, for heating or cooling a fluid and for the thermal stratification of said fluid inside an accumulation tank 2.

In particular, Figures 1 - 4, 8 and 9 show six respective embodiments of a thermal exchange system 1 used for heating a fluid in a tank 2.

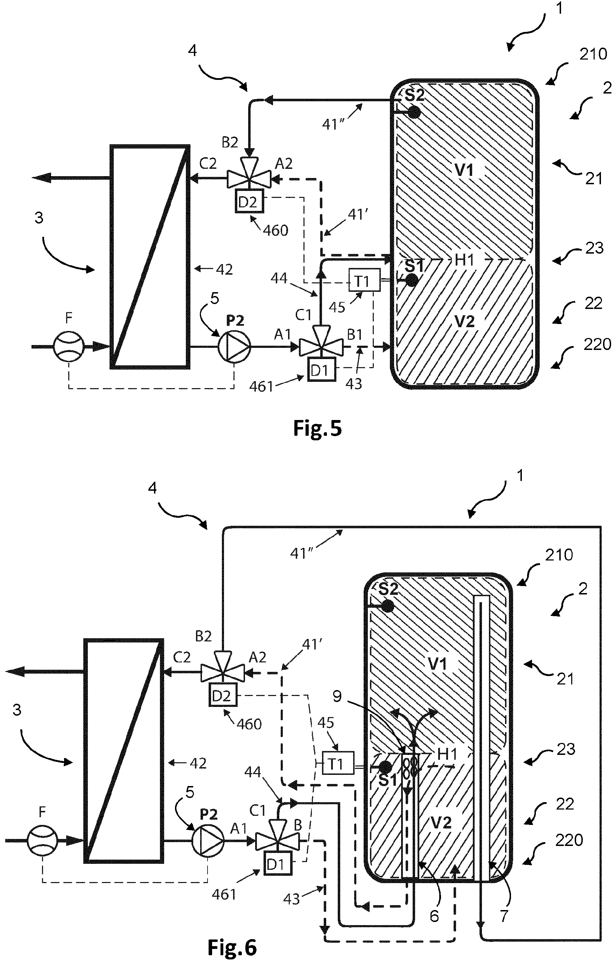

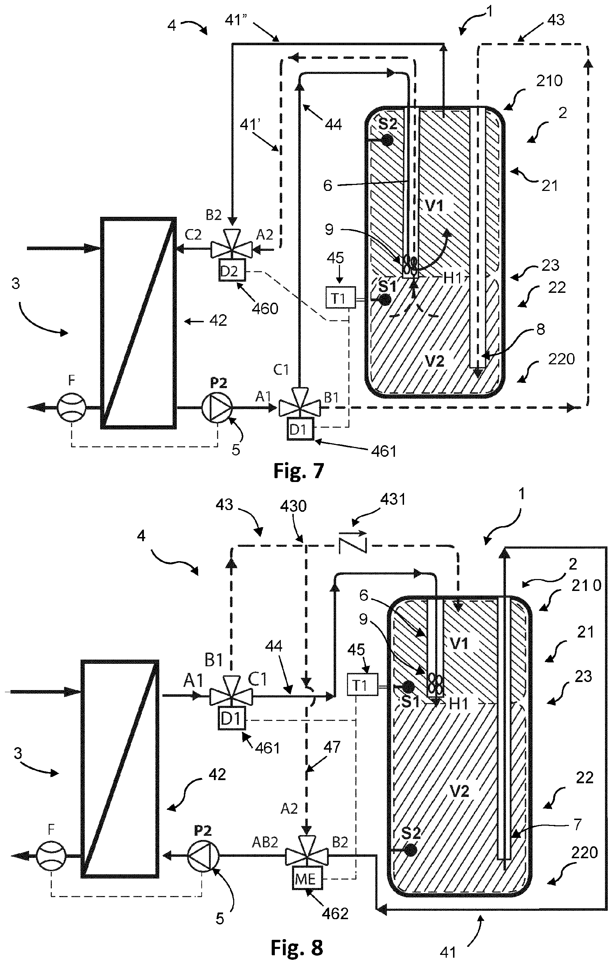

Figures 5 - 7 instead show three further embodiments of a thermal exchange system 1 that can be used for cooling a fluid in a tank 2. In particular, the first embodiment of Figure 1 and the fifth embodiment of Figure 5 substantially have the same structural characteristics. Similarly, the second embodiment of Figure 2 according to the invention and the seventh embodiment of Figure 7 according to the invention substantially have the same structural characteristics. Therefore, the same thermal exchange system 1 can be used both for heating a secondary fluid and for cooling it.

It is highlighted that embodiments corresponding to figures 1, 3 and 5 are not part of the invention and are not encompassed by the wording of the claims but are considered useful for understanding the invention.

With reference to all Figures 1 - 9, a thermal exchange system 1 comprises an accumulation tank 2, or tank 2, containing the fluid to be heated or cooled, also called secondary fluid.

The thermal exchange system 1 also includes:
- a thermal exchanger 3, arranged externally to said tank 2, wherein a primary heat transfer fluid, also called primary fluid, for example water, glycol water, superheated water, water vapor, cooling fluids, diathermic oil or other heat transfer fluid, flows inside said thermal exchanger 3;
- a secondary circuit 4, in particular a circuit 4 external, at least in part, to said tank 2, in fluidic connection with said tank 2 and in thermal connection with said thermal exchanger 3, for heating or cooling said secondary fluid by means of said primary fluid; and
- a hydraulic pump 5, in particular a hydraulic circulator 5, adapted to act on said secondary circuit 4 for circulating said secondary fluid inside it.

The tank 2 is a pressure tank, or a closed vessel tank, and internally comprises an upper portion 21, comprising and delimited by a top wall 210 of the tank 2, and a lower portion 22, comprising and delimited by a bottom wall 220 of the tank 2. Said upper portion 21 and said lower portion 22 are in fluidic contact with each other through an intermediate portion 23 arranged at an intermediate height H1 relative to the total height of the tank 2, as better illustrated below. In particular, this intermediate height H1 can be predetermined or variable. In the latter case, the intermediate height H1 may vary depending on how much secondary fluid is required.

The secondary fluid present in the upper portion 21 therefore occupies an upper volume V1 of the tank 2 and the secondary fluid present in the lower portion 22 occupies a lower volume V2 of the tank 2.

This secondary fluid can be, for example, water, sanitary water, glycol water, diathermic oil. However, other secondary fluids may be present inside said tank 2.

These volumes V1, V2 can be respectively sized according to the amount of secondary fluid to be initially heated or cooled, as better explained below. By way of example, in the case of a thermal exchange system 1 for heating water in a tank 2, the upper volume V1 may be greater than or equal to the volume of water required for a shower (between 70 and 100 liters) but for larger tanks (> 500 liters) it may also be much greater than such value.

The thermal exchanger 3 is preferably connected to a heat pump thermal generator (not shown in the figures) adapted to heat or cool said primary fluid, in a highly efficient manner from an energetic point of view.

However, the thermal exchanger 3 can also be connected to a different thermal generator, for example systems of the conventional type, such as gas, biomass or cogeneration boilers and the like.

With particular reference to the first embodiment of Figure 1, wherein the thermal exchange system 1 is used for heating a secondary fluid, the secondary circuit 4 comprises:
- two distinct withdrawal portions 41', 41", in fluidic connection with said tank 2, for withdrawing the secondary fluid to be heated from said tank 2 towards said thermal exchanger 3;
- a thermal exchange portion 42, arranged at said thermal exchanger 3, for heating said secondary fluid by means of thermal exchange with said primary fluid; and
- two distinct intake portions 43, 44 in fluidic connection with said tank 2, for introducing said heated secondary fluid into said tank 2.

In particular, the portions 41', 41", 42, 43, 44 of the secondary circuit 4 comprise ducts for such secondary fluid in fluidic connection with each other.

The two withdrawal portions 41', 41" are connected to the lower portion 22 of said tank 2.

Specifically, a first withdrawal portion 41', or intermediate withdrawal portion 41', is substantially arranged at said intermediate height H1, while a second withdrawal portion 41", or lower withdrawal portion 41", is arranged at the bottom 220 of said lower portion 22 of the tank 2, for the reasons better illustrated below.

Furthermore, such configuration allows to preserve the thermal stratification inside said tank 2, thanks to the operation method of the thermal exchange system 1 explained below.

The two intake portions 43, 44 are respectively a first intake portion 43, or upper intake portion 43, arranged at the top 210 of said upper portion 21 of the tank 2, and a second intake portion 44, or intermediate intake portion 44, arranged at said intermediate height H1.

In particular, in a preferred embodiment the intermediate withdrawal portion 41' and the intermediate intake portion 44 use the same connection to the tank 2.

The presence of the two withdrawal portions 41' and 41", which are unprecedented compared to the prior art tanks, combined with the two intake portions 43 and 44, allows to carry out the thermal exchange exclusively with the secondary fluid contained in a portion of the tank 2, and therefore to reach the desired temperature in said portion of secondary fluid within a reduced time, if compared to the heating time of the entire volume of secondary fluid contained in the tank 2, as occurs in the prior art tanks.

The secondary circuit 4 also includes:
- temperature detecting means 45, in particular a thermostat 45, arranged inside the tank 2 at said intermediate portion 23 at a first detecting height S1,
- flow diverter means 460, 461, also called flow control means 460, 461, adapted to divert the flow inside said secondary circuit 4, changing the secondary circuit from a first configuration to a second configuration, being able to act on the flow of said secondary fluid in said withdrawal portions 41', 41 "and in said intake portions 43, 44; and
- control means (not shown in the figure) connected to said temperature detecting means 45 and to said flow control means 460, 461, so as to be able to control the latter according to the temperature measured by said temperature detecting means 45.

Preferably, said first detecting height S1 is arranged above said intermediate height H1, so as to optimise the operation of system 1. By way of example, in the case of a tank 2 wherein V1 occupies up to 32% of the total volume, said first detecting height S1 can be arranged inside a sub-volume higher than said intermediate height H1 equal to about 22% of V1 (equal to about 7% of the total volume). In any case, this sub-volume is preferably 45% smaller than V1 (equal to about 14% of the total volume).

Alternatively, said first detecting height S1 can coincide with said intermediate height H1. Furthermore, the thermal exchange system 1 comprises second temperature detecting means arranged inside the tank 2 at a second detecting height S2 at said lower volume V2.

Such second temperature detecting means at said second detecting height S2 advantageously allow to control the temperature in the lower volume V2, on the basis of which the thermal generator is activated with its own logics to control the heating of the lower volume V2. Typically, such logics provide that: when the second temperature detecting means detect that a final heating temperature Tf has been reached, the thermal generator switches off, while if the second temperature detecting means detect that the temperature in the lower volume V2 departs from the final temperature Tf, the thermal generator switches on again.

The temperature detecting means 45 and the controlling means can be a thermostat or a control unit connected to temperature detecting means and to the flow control means, or any other instrument capable of detecting the temperature of the fluid at said first detecting height S1 and to send a command to be actuated to said flow control means 460, 461, on the basis of the detected temperature.

The flow control means 460, 461 comprise a three-way sampling valve 460, connected to and capable of acting on said withdrawal portions 41', 41", and a three-way intake valve 461, connected to and capable of acting on said intake portions 43, 44. In particular, said three-way withdrawal valve 460 and said three-way intake valve 461 are diverting valves, more preferably motorised diverting valves. The expression "three-way diverting valve" means a valve capable only of completely opening or completely closing a flow path. The expression "motorised three-way diverting valve" means a three-way diverting valve with an electrically operated motorised actuator.

However, such flow control means 460, 461 can also be of a different type.

In particular, in the example shown in Figure 1, relating to the heating of the secondary fluid, the three-way diverting withdrawal valve 460 comprises a first inlet A2 for the secondary fluid to be heated, in fluidic connection with said intermediate withdrawal portion 41', a second inlet B2 for the secondary fluid to be heated, in fluidic connection with said lower withdrawal portion 41", and an outlet C2 for the secondary fluid to be heated, in fluidic connection with said thermal exchange portion 42.

The three-way diverting intake valve 461 comprises an inlet A1 for the heated secondary fluid, in fluidic connection with said thermal exchange portion 42, a first outlet B1 for the heated secondary fluid, in fluidic connection with said upper intake portion 43, and a second outlet C1 for the heated secondary fluid, in fluidic connection with said intermediate intake portion 44.

The operation of the thermal exchange system 1 just described for heating a secondary fluid in a tank 2 takes place as follows:
in a first heating step, for heating the secondary fluid in said upper volume V1 of the tank 2, the secondary circuit 4 is in said first configuration, wherein the three-way diverting withdrawal valve 460 has the first inlet A2 open and the second inlet B2 closed, allowing the suction of the secondary fluid to be heated only through said intermediate withdrawal portion 41', to then send it, through the outlet C2, towards said thermal exchanger 3.

At the same time, the three-way diverting intake valve 461 has said first outlet B1 open for the heated secondary fluid and said second outlet C1 closed, so that the heated secondary fluid arriving from said thermal exchange portion 42 passes into said inlet A1, and, through said first outlet B1 is directed towards said upper intake portion 43, while the fluidic connection with said intermediate intake portion 44 is blocked. As a consequence of such first configuration of the secondary circuit 4 and of the natural stratification of the fluids, whereby the hottest fluid is arranged in the highest part of the accumulation tank 2, while the colder one is arranged in the lower part, only the secondary fluid contained in said upper volume V1 of said tank 2 is heated, without affecting the secondary fluid contained in the lower volume V2.

The first step of heating the secondary fluid in said upper volume V1 therefore provides that the same secondary fluid continues to be withdrawn from said volume V1 through said intermediate withdrawal portion 41', then further heated in said thermal exchange portion 42 and introduced again into said upper volume V1 through said upper intake portion 43.

Therefore, the secondary fluid heated by means of said thermal exchanger 3 and introduced into the upper volume V1 of said tank 2 through said upper intake portion 43, will have increasing temperatures as the heating cycle described above is repeated, until it reaches temperatures higher than or equal to a first preset temperature T1. In this way, it is possible to gradually heat the secondary fluid in the upper volume V1 until the first preset temperature T1 has been reached.

In fact, the introduction of the heated secondary fluid at the top 210 of the tank 2 through said upper intake portion 43 advantageously allows to not perturb the thermal stratification of the secondary fluid heated inside said upper portion 21, since the lighter heated secondary fluid remains in the upper part without mixing with the rest of the secondary fluid present inside the tank 2.

Furthermore, the withdrawal of secondary fluid to be heated at said intermediate portion 23 advantageously allows to withdraw a fluid at higher temperatures than that present at the bottom 220 of the tank 2, so as to maximise the heating efficiency of the secondary fluid in the upper volume V1.

Once the secondary fluid present inside the tank 2 at said first detecting height S1 reaches said first preset temperature T1, a second thermal exchange step begins, for heating the secondary fluid in said lower volume V2 of the tank 2. In such second step, the temperature detecting means 45 detect the reaching of the first preset temperature T1 at said first detecting height S1 and the controlling means send a command to said flow control means 460, 461, as a consequence of which the secondary circuit changes into said second configuration, wherein the three-way diverting withdrawal valve 460 has said first inlet A2 closed and said second inlet B2 open, thus allowing the suction of the secondary fluid to be heated only through said lower withdrawal portion 41".

At the same time, the three-way diverting intake valve 461 has said first outlet B1 closed and said second outlet C1 open, so that the heated secondary fluid arriving from said thermal exchange portion 42 in said inlet A1 is directed only towards said intermediate intake portion 44.

Therefore, the secondary fluid heated by means of said thermal exchanger 3 returns inside the tank 2, being introduced at said intermediate height H1.

The heated secondary fluid which is introduced into the tank 2 through said intermediate intake portion 44, has a temperature lower than or equal to said first preset temperature T1 of the heated secondary fluid in said upper volume V1 following the repeated heating cycles carried out in said first heating step. In particular, initially such temperature is lower than said first preset temperature T1 and increases as the heating cycle described above is repeated, until a final heating temperature Tf, independent of said first preset temperature T1, can be reached.

The heated secondary fluid introduced into said lower volume V2 at said temperature which is less than or equal to said first preset temperature T1 and therefore less than or equal to the temperature of the heated secondary fluid present in the upper volume V1, being heavier than the latter, cannot rise upwards and mix with the secondary fluid in the upper volume V1.

Therefore, at said intermediate portion 23, at said intermediate height H1, a thermal separation layer will be created between the two secondary fluids present in the two volumes V1 and V2.

The step of heating the secondary fluid in said lower volume V2 then provides that the same secondary fluid continues to be withdrawn from said lower volume V2, then further heated in said thermal exchange portion 42 and introduced again into said lower volume V2. In this way, the secondary fluid in the lower volume V2 is gradually heated as the cycle described above is repeated until the final heating temperature Tf has been reached, without perturbing the thermal stratification of the heated secondary fluid inside the upper volume V1, ensuring the preservation of the thermal stratification inside the tank 2.

Advantageously, thanks to such configuration, a temperature stratification is maintained in the secondary fluid present in the upper volume V1 and in the secondary fluid present in the lower volume V2.

In fact, if the final heating temperature Tf is less than or equal to said first preset temperature T1, for natural stratification, the fluid remains below the upper volume V1 without perturbing the stratification. If on the contrary the final heating temperature Tf is higher than the first preset temperature T1, for natural stratification, the whole tank 2 will be gradually heated until the final heating temperature Tf has been reached, subject to the advantageous conditions of having the upper volume V1 at a temperature greater than or equal to the first preset temperature T1 and of gradually carrying out the heating.

The thermal exchange system 1 is therefore configured to work separately on two parts of the tank 2, exchanging heat first with one part, making the secondary fluid contained therein quickly available and sufficient for ensuring an immediate need and then with the other part, which constitutes a longer-term thermal energy reserve. In particular, the amount of fluid in the first volume V1 can be adapted by varying said intermediate height H1, for example by arranging different connections to which the intermediate intake portion 44 and possibly the intermediate return portion 41' can be connected.

In one embodiment, two different connections may be provided for said intermediate intake portion 44 and two different connections may be provided for the intermediate return portion 41'. In one embodiment, the relative temperature sensors 45 could be arranged at each connection at different detecting heights S1. In a further embodiment, a single placed temperature sensor 45 can be configured for detecting the temperature of the secondary fluid at a detecting height S1 both if the intermediate intake portion 44 is connected to a first connection and if the intermediate intake portion 44 is connected to a second connection.

Such thermal exchange method is particularly advantageous, since the first predetermined temperature T1 and the final heating temperature Tf of the secondary fluid are gradually reached in each part of the tank 2, following the exchange protocols proper of the generator and in particular of the heat pumps. In fact, the heat pumps vary the power delivered and exchanged in the thermal exchanger 3, on the basis of the thermodynamic conditions of the exchange, such as the temperature and flow rate of the secondary fluid, to obtain the best efficiency, without having to continuously control the temperature and flow rate of the primary fluid and/or of the secondary fluid, a control which can lead to a reduction in the efficiency of the generators to which it is connected, especially the heat pump generators.

With particular reference to Figure 5, a fifth embodiment of the thermal exchange system 1 can be seen, which has characteristics similar to the thermal exchange system 1 according to the first embodiment and just described with reference to Figure 1, but which is used for cooling a secondary fluid inside the tank 2. In particular, the thermal exchanger 3 of the system 1 is connected to a thermal generator, in particular a heat pump, which acts on the primary heat transfer fluid flowing in the thermal exchanger 3 to cool it.

Also in this case, the secondary circuit 4 comprises:
- a first withdrawal portion 41' and a second withdrawal portion 41", in fluidic connection with the accumulation tank 2, for withdrawing the secondary fluid to be cooled from said tank 2 towards said thermal exchanger 3;
- a thermal exchange portion 42, arranged at said thermal exchanger 3, for cooling said secondary fluid through thermal exchange with said primary fluid; and
- a first intake portion 43 and a second intake portion 44 in fluidic connection with said tank 2, for introducing said cooled fluid into said tank 2.

In particular, the portions 41', 41", 42, 43, 44 of the secondary circuit 4 include the same ducts illustrated in the example of Figure 1, but whose functions are reversed.

The two withdrawal portions 41', 41" are in fact both connected to the upper portion 21 of said tank 2.

In particular, the first withdrawal portion 41', or intermediate withdrawal portion 41', is substantially arranged at an intermediate height H1, while a second withdrawal portion 41 ", or upper withdrawal portion 41 ", is arranged at the top 210 of said upper portion 21 of the tank 2.

Furthermore, the first intake portion 43 or lower intake portion 43 is arranged at the bottom wall 220 of said tank 2, and said second intake portion 44, or intermediate intake portion 44, is arranged at said intermediate height H1, for the reasons better illustrated below.

In particular, in a preferred embodiment the intermediate withdrawal portion 41'and the intermediate intake portion 44 use the same connection to the tank.

The temperature detecting means 45 are arranged at said intermediate portion 23 at a first detecting height S1 lower than said intermediate height H1, so as to optimise the operation of said thermal exchange system. In one embodiment (not shown), such first detecting height S1 can coincide with the intermediate height H1.

By way of example, in the case of a tank 2 wherein V2 occupies up to 32% of the total volume, said first detecting height S1 can be arranged within a sub-volume lower than said intermediate height H1 equal to about 22% of V2 (equal to about 7% of the total volume). In any case, this sub-volume is preferably 45% smaller than V2 (equal to about 14% of the total volume).

Furthermore, said flow control means 460, 461 are present for changing the secondary circuit from the first configuration to the second configuration.

In particular, the three-way diverting withdrawal valve 460 comprises a first inlet A2 for the secondary fluid to be cooled, in fluidic connection with said intermediate withdrawal portion 41', a second inlet B2 for the secondary fluid to be cooled, in fluidic connection with said upper withdrawal portion 41", and an outlet C2 for the secondary fluid to be cooled, in fluidic connection with said thermal exchange portion 42.

The three-way diverting intake valve 461 comprises an inlet A1 for the cooled secondary fluid, in fluidic connection with said thermal exchange portion 42, a first outlet B1 for the cooled secondary fluid, in fluidic connection with said lower intake portion 43, and a second outlet C1 for the cooled secondary fluid, in fluidic connection with said intermediate intake portion 44.

In fact, during use, when the secondary circuit 4 is in said first configuration, the secondary fluid is withdrawn from said intermediate withdrawal portion 41', sent to the thermal exchanger 3, by means of which it is cooled, before being introduced into the lower volume V2 of said tank 2 through said lower intake portion 43.

The step of cooling the secondary fluid in said lower volume V2 therefore provides that the secondary fluid continues to be withdrawn from said lower volume V2 through said intermediate withdrawal portion 41', then further cooled in said thermal exchange portion 42 and introduced again into said lower volume V2 through said lower intake portion 43.

Therefore, the secondary fluid cooled by means of said thermal exchanger 3 and introduced into the lower volume V2 of said tank 2 through said lower intake portion 43, will have a gradually decreasing temperature, as the cooling cycle described above is repeated, until it has a temperature less than or equal to a first preset temperature T1.

There is therefore a first step of cooling the secondary fluid in said lower volume V2 with said secondary circuit 4 in said first configuration. In said first step, the three-way diverting withdrawal valve 460 has the first inlet A2 open for the secondary fluid to be cooled and the second inlet B2 closed, allowing the suction of the secondary fluid only through said intermediate withdrawal portion 41', before sending it, through the outlet C2, towards said thermal exchanger 3. The cooled fluid is then sent by the thermal exchanger 3 to the second three-way diverting intake valve 461, which will have said first outlet B1 open and said second outlet C1 closed.

Therefore, the cooled secondary fluid is introduced at the bottom 220 of the tank 2 through said lower intake portion 43. This advantageously allows to not perturb the thermal stratification of the cooled fluid inside said lower portion 22, since the heavier cooled fluid remains in the lower part without mixing with the rest of the secondary fluid present inside the tank 2.

Furthermore, the withdrawal of secondary fluid to be cooled at said intermediate portion 23 advantageously allows to withdraw a fluid at lower temperatures than those at the top 210 of the tank 2, in order to maximise the cooling efficiency of the secondary fluid in the lower volume V2.

Furthermore, advantageously, only the secondary fluid contained in said lower volume V2 of said tank 2 is cooled, without affecting the upper volume V1

Once the temperature detecting means 45 detects that the secondary fluid present inside the tank 2 at said first detecting height S1 reaches said first preset temperature T1, a second thermal exchange step begins, for cooling the secondary fluid in said upper volume V1 of the tank 2.

The temperature detecting means 45 in fact detect when said first preset temperature T1 has been reached and the controlling means send a command to said flow control means 460, 461, as a result of which the secondary circuit 4 changes into said second configuration, wherein the three-way diverting withdrawal valve 460 has said first inlet A2 closed and said second inlet B2 open, thus allowing the suction of the secondary fluid to be cooled only through said upper withdrawal portion 41".

At the same time, the three-way diverting intake valve 461 has said first outlet B1 closed and said second outlet C1 open, so that the cooled secondary fluid arriving from said thermal exchange portion 42 in said inlet A1 is directed only towards said intermediate intake portion 44.

Therefore, the secondary fluid cooled by means of said thermal exchanger 3 returns inside the tank 2, being introduced at said intermediate portion 23 at said intermediate height H1.

The cooled secondary fluid is introduced into said upper volume V1 at a temperature greater than or equal to said first preset temperature T1 and therefore of the temperature of the secondary fluid present in the lower volume V2 following the repeated heating cycles carried out in said first heating step so, being lighter than the latter, it cannot go down and mix with the secondary fluid in the lower volume V2. In particular, such temperature of the secondary fluid introduced into the upper volume V1 is initially greater than said first preset temperature T1 and gradually decreases as the cooling cycle described below is repeated, until a final cooling temperature Tf has been reached, independent of said first preset temperature T1.

Therefore, a thermal separation layer is created between the two secondary fluids present in the two volumes V1 and V2 at said intermediate portion 23 at said intermediate height H1.

The cooling step of the secondary fluid in said upper volume V1 therefore provides that the same secondary fluid continues to be withdrawn from said upper volume V1 through said upper withdrawal portion 41", then further cooled in said thermal exchange portion 42 and introduced again into said intermediate portion 23 of the tank 2 through said intermediate intake portion 44. In this way, the secondary fluid in said upper volume V1 is gradually cooled until the final cooling temperature Tf has been reached, without perturbing the thermal stratification of the cooled secondary fluid inside said lower portion 22 of the tank 2.

In this way, the preservation of the thermal stratification inside the tank 2 is guaranteed.

In fact, if the final cooling temperature Tf is greater than or equal to said first preset temperature T1, by natural stratification, the secondary fluid remains in the upper volume V1 without perturbing the stratification. If, on the other hand, the final cooling temperature Tf is lower than said first preset temperature T1, by natural stratification, the whole tank 2 will be gradually cooled until said final cooling temperature Tf has been reached, subject to the advantageous conditions of having the lower volume V2 at a temperature lower than or equal to said first preset temperature T1 and of gradually carrying out the cooling.

With particular reference to figure 2, a second embodiment of a thermal exchange system 1 according to the present invention can be seen which can have all the technical characteristics of the thermal exchange system 1 described for Figure 1 (to which the same numerical references have been assigned), but where said withdrawal portions 41', 41"and said intermediate intake portion 44 are connected to respective internal ducts 6, 7, arranged inside said tank 2.

In particular, the secondary circuit 4 shown in Figure 2 includes:
a first internal duct 6 that goes from said top 210 of the tank 2 up to said intermediate height H1, to which said first withdrawal portion 41' and said second intake portion 44 are connected in fluidic connection, and
a second internal duct 7, which goes from said top wall 210 up to the lower portion 22 of the tank 2, in fluidic connection to said second withdrawal portion 41.

In such embodiment, preferably said first detecting height S1, at which the temperature detecting means 45 are arranged, is arranged above said intermediate height H1, so as to optimise the operation of the system 1.

Alternatively, said first detecting height S1 can coincide with said intermediate height H1.

The presence of such internal ducts 6, 7 makes the hydraulic connection of the tank 2 to the secondary circuit 4 more advantageous, which, in this way, can be completely made in correspondence of its top 210, also facilitating the maintenance of the tank 2.

The thermal exchange system 1 made in this way can also have smaller dimensions, if compared to thermal exchange systems 1 wherein the secondary circuit 4 is connected in different points of the tank 2, and because the first internal duct 6 can be connected in common to said first withdrawal portion 41' and to said second intermediate intake portion 44.

Such internal ducts 6 and 7 could be variable in length so as to vary the height of the introduction and/or withdrawal of the secondary fluid into/from the tank 2.

Such variation in length of the internal ducts 6 and 7 can be obtained:
- providing the end user with internal ducts of different lengths to be inserted in the connection of said withdrawal portions 41', 41" and/or said intermediate intake portion 44 of the tank 2; or
- using internal telescopic ducts; or
- providing the end user with ducts of different heights, to be inserted inside the internal ducts assembled during manufacturing, in order to extend them until the desired height of introduction and/or withdrawal of the secondary fluid into/from the tank 2 is obtained.

With particular reference to Figure 7, a seventh embodiment of the thermal exchange system 1 according to the invention can be seen, which has a circuit similar to the thermal exchange system 1 according to the second embodiment just described with reference to Figure 2, and which is used for cooling a secondary fluid inside the tank 2.

The two-step cooling operation is equivalent to the two-step cooling operation described for the fifth embodiment of Figure 5, but where some withdrawal/intake portions are connected to respective ducts 6, 7.

In particular, the thermal exchanger 3 of the thermal exchange system 1 is connected to a thermal generator, in particular a heat pump, which acts on the primary heat transfer fluid flowing in the thermal exchanger 3 to cool it.

The secondary circuit 4 shown in figure 7 includes:
a first internal duct 6 which goes from said top wall 210 of the tank 2 up to said intermediate height H1, to which said first withdrawal portion 41' and said second intake portion 44 are connected, in fluidic connection,
a second internal duct 8, which goes from said top wall 210 to said lower portion 22 of the tank 2, in fluidic connection to said first intake portion 43.

In such embodiment, the first detecting height S1 is preferably lower than the intermediate height H1.

The second withdrawal portion 41" is arranged directly on the top 210 of said tank. With particular reference to Figure 6, in a sixth embodiment of the thermal exchange system 1 according to the invention, a thermal exchange system for cooling the secondary fluid is shown, having all the characteristics of the system of Figure 2, but including internal ducts 6, 7 starting from the bottom 220 of said tank 2, the first internal duct 6 going from the bottom 220 towards said intermediate height H1 and the second internal duct 7 going from the bottom 220 towards the top 210 of the tank 2 at the upper portion 21 .

The two-step cooling operation is equivalent to the operation described for the fifth embodiment of Figure 5.

In an embodiment (not shown), the thermal exchange system of Figure 6 can also be used for heating a secondary fluid, by inverting the respective described connections, i.e. by connecting the intake 43 to the internal duct 7, which from the bottom 220 ends at said top 210 of the tank 2, and the withdrawal 41" directly to the bottom 220 (instead the intermediate withdrawal portion 41 " and the second intake portion 44 remain connected to the internal duct 6 which ends at said intermediate height H1).

The intermediate height H1 can be varied by lengthening or shortening the first internal duct 6 inside the tank 2.

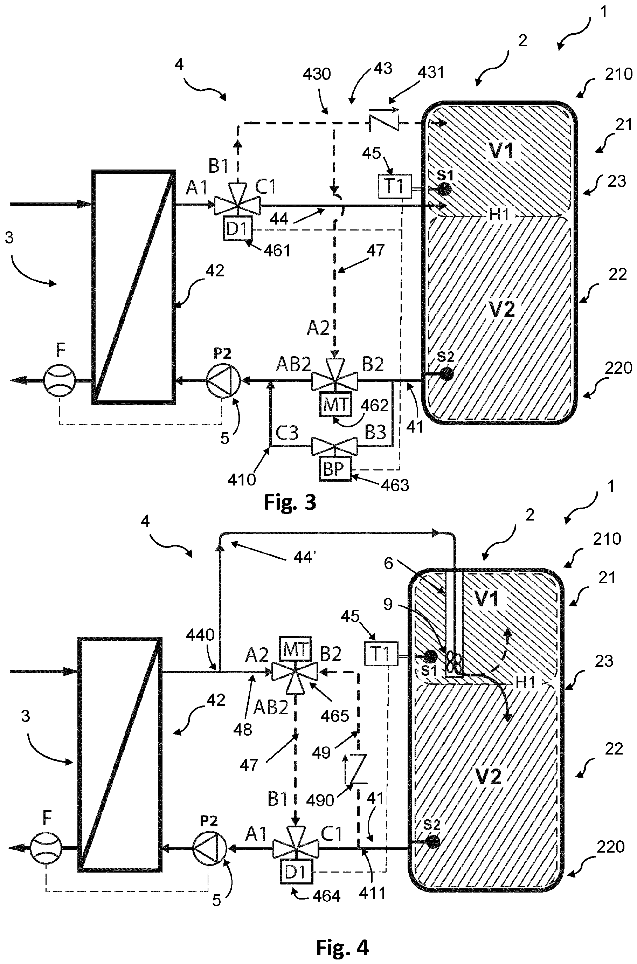

With particular reference to Figure 3, wherein a third embodiment of the thermal exchange system 1 is shown, used only for heating a secondary fluid, it is noted that the secondary circuit 4 can only comprise a withdrawal portion 41 instead of said first withdrawal portion 41' and of said second withdrawal portion 41", while the first intake portion 43 and the second intake portion 44 are arranged in the same position as the thermal exchange system 1 in the first embodiment of Figure 1.

Such single withdrawal portion 41 can in fact be connected directly to the bottom 220 of the tank 2, without however affecting the two-step heating of the secondary fluid present in the tank 2, which in any case occurs first in the secondary fluid present in the upper volume V1 and then in that present in the lower volume V2.

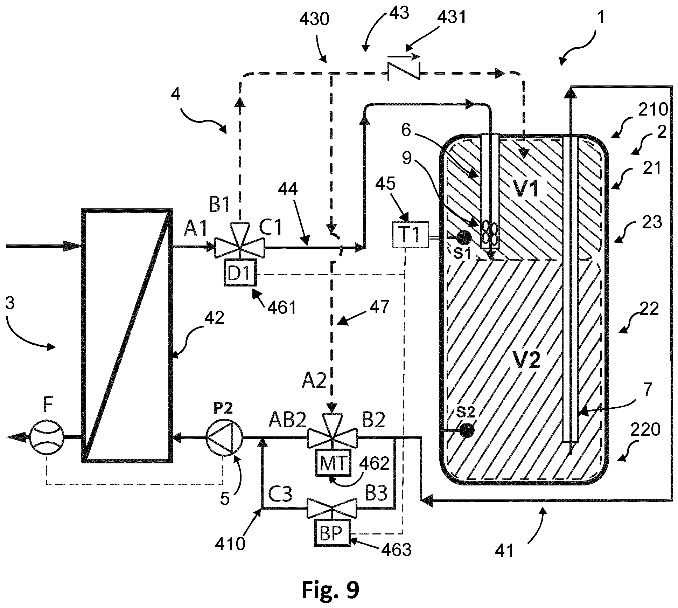

Furthermore, in the particular embodiment shown in Figure 3, and also in those of Figures 8 and 9, the heating of the secondary fluid directed towards said upper intake portion 43 is obtained by adjusting the temperature of the secondary fluid to be heated in said thermal exchange portion 42 and by adjusting the flow rate of the secondary fluid introduced into said upper volume V1, which remains null until a second preset temperature T2 of the secondary fluid to be introduced into said upper volume V1, greater than or equal to said first set temperature T1 of the fluid in the upper portion 21 of the tank 2, has been reached, thus carrying out a preheating with recirculation inside the secondary circuit 4 itself.

In fact, in this case the flow control means 461, 462, 463 and the controlling means comprise a three-way mixing valve 462, or three-way mixing withdrawal valve 462, instead of said three-way diverting withdrawal valve 460 of the embodiments of Figures 1 and 2. Preferably, such three-way mixing valve 462 is a thermostatic mixing valve, preferably a self-operated thermostatic mixing valve (such as that of Figures 3 and 9), or an electronic mixing valve (such as that of Figure 8).

In particular, the expression "three-way mixing valve" means any three-way valve comprising two inlets and one outlet and capable of modifying the flow from or towards each inlet, opening one and proportionally closing the other, partially or totally, in order to allow the control of the mixing of the flows from or towards the outlet. The expression "thermostatic three-way mixing valve" means a three-way mixing valve provided with a temperature detector of the flow, to control said openings and closings on the basis of the temperature detection by means of said detector. The expression "self-operated thermostatic three-way mixing valve" means a "thermostatic three-way mixing valve" provided with a controller capable of reading the temperature detected by means of said detector and operating an actuator to control said openings and closures on the basis of the temperature detection, without requiring a connection to an external controller. Finally, the expression "electronic three-way mixing valve" means a three-way mixing valve that can be connected to an external controller that electrically operates the actuator to control said openings and closings. Such external controller can be a control unit which can also control the activities of the controlling means described above. In particular, the control unit is able to receive the detected temperature data compared over time and send the relative opening/closing signals, possibly modulated, to the mixing valve and/or to other flow control means.

Therefore, in alternative embodiments compared to those of Figure 3, the three-way mixing valve 462 can be any three-way mixing valve and can be connected to a temperature sensor arranged at the outlet of the thermal exchange portion 42 and/or to a relative controller, to control the movement of the secondary fluid in the secondary circuit 4, on the basis of the temperature of the secondary fluid in said secondary circuit 4.

The three-way intake valve 461 is equivalent to the three-way intake valve 461 described for the embodiments of the thermal system 1 of Figures 1 and 2. In particular, said three-way intake valve 461 is a diverting valve, preferably a motorised diverting valve.

Therefore, said three-way diverting intake valve 461 has said inlet A1 for the heated secondary fluid, said first outlet B1 for the heated secondary fluid, in fluidic connection with the upper intake portion 43, and said second outlet C1 for the heated secondary fluid, in fluidic connection with the intermediate intake portion 44.

The three-way mixing valve 462 therefore comprises a recirculation inlet A2, or first inlet A2, in fluidic connection to the first outlet B1 of the three-way diverting intake valve 461, a second inlet B2 for the secondary fluid to be heated, in fluidic connection with said withdrawal portion 41, and an outlet AB2 for the secondary fluid to be heated, in fluidic connection with the inlet of said thermal exchange portion 42.

In particular, the three-way mixing valve 462 can be configured (if it is thermostatic), or it can be controlled (if it is electronic), so as to keep the secondary fluid flow coming out of said outlet AB2 at a temperature lower or equal to said second preset temperature T2.

The portion of the secondary circuit 4 which goes from said first outlet B1 of the three-way diverting intake valve 461 to said recirculation inlet A2 of the three-way mixing valve 462 is therefore a recirculating portion 47, and is connected to the outlet of the thermal exchange portion 42 and to said first intake portion 43 at a connection point 430, located upstream of said tank 2.

Between said connection point 430 and said first intake portion 43 there is a non-return valve 431, which prevents the flow from the upper portion 21 of the tank 2 towards the three-way diverting intake valve 461 and towards the three-way mixing valve ways 462.

Furthermore, in the embodiment shown in Figures 3 and 9, since the three-way mixing valve 462 is a self-operated thermostatic mixing valve, the secondary circuit 4 also comprises a bypass portion 410 which starts from said withdrawal portion 41 and fluidically connects said thermal exchange portion 42 with said bottom 220 of said tank 2 through a bypass valve 463, connected to said controlling means, without passing through said three-way mixing valve 462.

The bypass valve 463 comprises a respective inlet B3 in fluidic connection with said withdrawal portion 41 and an outlet C3 in fluidic connection with said outlet AB2 for the secondary fluid to be heated. In fact, the bypass valve 463 has only an open/closed configuration.

In this way, during use, in the first heating step, for heating the secondary fluid in said upper portion 21, when the secondary circuit 4 is in said first configuration, the three-way mixing valve 462 initially has the second inlet B2 closed and said bypass valve 463 is closed, thus preventing the secondary liquid from flowing from said lower portion 22 of tank 2, while said three-way diverting intake valve 461 has the outlet C1 closed, preventing the secondary liquid from flowing towards said intermediate portion 23 and said non-return valve 431 prevents the secondary liquid from flowing from said upper portion 21. Therefore, there can be no flow through the tank 2 and the secondary fluid present inside the secondary circuit 4 can initially circulate only inside the secondary circuit 4 itself.

In fact, since the system is a closed circuit under pressure, the secondary fluid is always present in the secondary circuit.

Then, the entire flow of secondary fluid passes from said thermal exchange portion 42, where it is heated, towards said recirculating portion 47 and, through said three-way mixing valve 462, is recirculated towards said thermal exchange portion 42, without passing through said tank 2.

Such recirculation takes place until the temperature of the heated fluid coming from said recirculating portion 47 reaches, at said three-way mixing valve 462, the second preset temperature T2, which is greater than or equal to said first set temperature T1.

Upon reaching such second preset temperature T2, the three-way mixing valve 462, being configured to keep the temperature of the secondary fluid exiting from AB2 lower than or equal to said second preset temperature T2, partially opens the second inlet B2 and partially closes the first inlet A2. Said opening and closing are proportional to each other and both proportional to the difference between the temperature of the secondary fluid in the recirculating portion 47 and said second preset temperature T2. In this way, a flow of secondary fluid is allowed in said withdrawal portion 41 from the tank 2 with a flow rate controlled by the three-way mixing valve 462. This entails a simultaneous introduction of secondary fluid exiting from said thermal exchange portion 42 in the part of said upper intake portion 43 downstream of said connection point 430, with the same flow rate in said withdrawal portion 41. Such introduction is simultaneous with the recirculation of the remaining part of heated secondary fluid exiting from said exchange portion 42 through said recirculating portion 47, as long as also the recirculation inlet A2 of the three-way mixing valve 462 remains open.

In fact, since the tank 2 is of the closed vessel type, under pressure, the flow rate of the flow passing through the upper intake portion 43 and going from said connection point 430 towards said tank 2 is equal to that of the flow withdrawn through the withdrawal portion 41.

As a consequence of this, there is a flow through the withdrawal portion 41 with consequent introduction of heated secondary fluid into the tank 2 through the upper intake portion 43 only when the temperature of the secondary fluid in said upper intake portion 43, which is the same as said recirculating portion 47, is greater than or equal to said second preset temperature T2. Therefore, the heated secondary fluid is introduced in said tank 2, through said upper intake portion 43 at a temperature which is always greater than or equal to said second preset temperature T2.

In other words, since the three-way mixing valve 462 regulates the mixing of the secondary fluid towards said thermal exchange portion 42 by controlling the flow rate in the withdrawal portion 41 and in the recirculating portion 47, it also regulates the temperature and the flow rate of the fluid introduced into said tank 2, through said upper intake portion 43.

The first step of heating the secondary fluid in said upper volume V1 therefore provides that the secondary fluid heated to a temperature greater than or equal to said second preset temperature T2, in turn greater than or equal to said first preset temperature T1, is introduced into said upper volume V1 through said upper intake portion 43, occupying the upper volume V1 from the top to the bottom so that the highest part of said upper volume V1 is always at a temperature greater than or equal to said first preset temperature T1 and therefore always available for use from the first liters of heated secondary fluid.

Once the secondary fluid present in the tank 2 at said first detecting height S1 has reached the first preset temperature T1, a second heating step starts, for heating the secondary fluid in said lower portion 22 of the tank 2. The temperature detecting means 45 detect when said first preset temperature T1 has been reached and the controlling means send a command to said flow control means 461, and 463, and, in case the three-way mixing valve 462 is an electronic valve, also to said electronic three-way mixing valve, as a result of which the secondary circuit changes into said second configuration.

In particular, the three-way diverting intake valve 461 closes said first outlet B1 and opens said second outlet C1 for the heated secondary fluid, and said bypass valve 463 opens the respective inlet B3, so that all the secondary fluid circulating in the secondary circuit 4 is withdrawn from the tank 2 through the withdrawal portion 41, passes through the bypass portion 410, without being mixed with the secondary fluid heated in said thermal exchange portion 42 and coming from said recirculating portion 47, before being heated in the thermal exchange portion 42 and sent towards said intermediate intake portion 44.

The heated secondary fluid therefore no longer passes through said upper intake portion 43, nor through said recirculating portion 47.

In fact, since the outlet B1 and the non-return valve 431 are closed, there are no access routes to said upper intake portion 43 or to said recirculating portion 47 (which become "dead branches"). Therefore, all the flow passes from the thermal exchange portion 42 through the intermediate intake portion 44 into the volume V2 and then from the withdrawal portion 41 to the thermal exchange portion 42 passing through the bypass duct 410. A transitional period may be provided at the beginning of this second step, wherein part of the flow taken from the withdrawal portion 41, in addition to the bypass portion 410, also passes through the thermostatic mixing valve 462, without entailing any change to the described operation. Moreover, said thermostatic mixing valve 462, due to the effect of the low temperature of the secondary fluid coming from the withdrawal portion 41, closes in a short time, ending said transitional period.

The second step of heating the secondary fluid in said lower volume V2 then provides that the same secondary fluid continues to be withdrawn from said lower volume V2 through the withdrawal portion 41, heated in said thermal exchange portion 42 and introduced into said lower volume V2 through said intermediate intake portion 44.

Then, the heated secondary fluid is initially introduced into said lower volume V2 at a temperature less than or equal to said second preset temperature T2.

Furthermore, by virtue of said direct exchange with the secondary fluid coming from the bottom 220 of the tank 2, without said preheating with recirculation, the temperature of the heated secondary fluid is also lower than the first preset temperature T1 reached in the upper volume V1 and gradually increases as the cycle described above is repeated. Therefore, the heated secondary fluid that is introduced into the lower volume V2 of said tank 2 at said intermediate height H1, being less hot and heavier than the secondary fluid heated in the upper volume V1, cannot rise and mix with the former, preserving the thermal stratification inside the tank 2.

In this way it is possible to gradually heat the secondary fluid inside the lower volume V2 of the tank 2 until the final heating temperature Tf has been reached, without perturbing the thermal stratification of the secondary fluid heated inside said upper portion 21, ensuring the preservation of the thermal stratification inside the tank 2.

As mentioned, the three-way mixing valve 462 can be an electronic valve, and not a thermostatic one. In this case, as for the embodiment of Figure 8, the three-way mixing valve 462 is controlled by an external controller which electrically operates an actuator for controlling the opening and closing of the inlets and outputs A2 and B2 on the basis of the detected temperature of the secondary fluid flowing through it. In this case, the bypass portion 410 with the relative bypass valve 463 may not be present, because in said second configuration of the secondary circuit during said second heating step, said external controller can completely open the second inlet B2 and completely close the first inlet A2 of said electronic three-way mixing valve 462, allowing all the circulating secondary fluid flow to be withdrawn from the tank 2 through the withdrawal portion 41, and sent towards said thermal exchange portion 42 through the electronic three-way mixing valve 462.

Therefore, when the first inlet A2 of said electronic three-way mixing valve 462 and the non-return valve 431 are closed, there are no access routes to said upper intake portion 43 or to said recirculating portion 47 (which become "branches dead "). Therefore, all the flow passes from the thermal exchange portion 42 through the intermediate intake portion 44 into the volume V2 and then from the withdrawal portion 41 towards the thermal exchange portion 42 passing through the electronic three-way mixing valve 462.

In summary, in said second heating step, once the first preset temperature T1 has been reached at said first detecting height S1, the controlling means send a signal to the three-way diverting valve 461 which closes said output B1 and opens said output C1 and, if the three-way mixing valve 462 is an electronic valve, also to said electronic three-way mixing valve 462, which completely opens the second inlet B2 and completely closes the first inlet A2; or, if the three-way mixing valve 462 is a thermostatic valve, said controlling means also send a signal to said bypass valve 463, which opens the passage from B3 to C3.

Following said signals, the flow withdrawn from said tank 2 goes directly from said bottom 220 of said tank 2 to said thermal exchange portion 42, without being mixed with the heated secondary fluid coming from said thermal exchange portion 42, passing through said bypass portion 410 or through said electronic three-way mixing valve 462, avoiding any risk of partial or total occlusion of the flow passage.

In this way, the flow of secondary fluid directed towards said thermal exchange portion 42 is allowed even at a temperature less than or equal to said second preset temperature T2.

As a consequence of this, the circulation of the secondary fluid takes place directly and exclusively between the lower portion 22 of the tank 2 and the thermal exchanger 3. Such circulation is particularly advantageous, since the secondary fluid in said lower volume V2 is gradually heated as the heating cycle described above is repeated, until the final heating temperature Tf has been reached. This makes it possible to follow the exchange protocols proper of the generator and in particular of the heat pumps, which vary the power delivered and exchanged in the thermal exchanger 3, on the basis of the thermodynamic conditions of the exchange, such as temperature and flow rate of the secondary fluid, to obtain the better efficiency, without having to resort to a continuous control of the temperature and flow rate of the primary fluid and/or the secondary fluid. This control can in fact lead to a reduction in the efficiency of the generators to which it is connected, especially to heat pump generators.

Figure 9 shows a ninth embodiment of the thermal exchange system 1 according to the invention, which has the same characteristics described for the embodiment of Figure 3 and which is also provided with internal ducts 6 and 7.

In particular, as shown in Figure 9, the secondary circuit 4 provides
a first internal duct 6 arranged inside the tank 2 which connects the intermediate intake portion 44 with the intermediate portion 23 of the tank 2; and
a second internal duct 7, always arranged inside said tank 2, which connects the lower portion 22 of the tank 2 with the withdrawal portion 41.

Both the internal ducts 6 and 7 are coupled to the top wall 210 of the tank 2 and end inside it at different heights, as previously described.

Referring in particular to the embodiment of Figure 8, it is very similar to the embodiment of Figure 9, however the three-way mixing valve 462 is electronic and the bypass circuit 410 is not provided.

Finally, with reference to the fourth embodiment of Figure 4, it is shown a thermal exchange system 1 according to the invention for the heating only of a secondary fluid, having technical characteristics similar to those of the thermal exchange system 1 of Figure 3, but without said bypass portion 410 and therefore said bypass element 463, thanks to an alternative arrangement of the flow control means 464, 465.

In particular, in this case there are a three-way diverting withdrawal valve 464 and a three-way mixing valve 465 connected to each other by means of a recirculating portion 47, to send the heated fluid again towards the thermal exchange portion 42.

The three-way diverting withdrawal valve 464 comprises a first inlet C1, for the secondary fluid to be heated, in fluidic connection with said bottom 220 of said tank 2 through said withdrawal portion 41; a second inlet B1, or recirculation inlet B1, in fluidic connection with the recirculating portion 47; and an outlet A1 for the secondary fluid to be heated, in fluidic connection with the inlet of said thermal exchange portion 42.

The three-way mixing valve 465, which also in this case is preferably a thermostatic mixing valve, more preferably of the self-operated type, comprises: a first inlet A2 for the heated secondary fluid, in fluidic connection with the outlet of said thermal exchange portion 42; a second inlet B2 for the secondary fluid to be heated, in fluidic connection with said bottom 220 of said tank 2 by means of a further withdrawal portion 49; and a recirculation outlet AB2, in fluidic connection with said recirculating portion 47 for sending secondary fluid towards said recirculation inlet B1 of said three-way diverting withdrawal valve 464.

The outlet of the thermal exchange portion 42 is also in fluidic connection with the intake portion 44'. In particular, at a connection point 440, the intake portion 44' and a third recirculating portion 48 which goes towards the first inlet A2 of the three-way mixing valve 465, branch off from the outlet of the thermal exchange portion 42.

The further withdrawal portion 49 unwinds from said withdrawal portion 41 at a second connection point 411 and comprises a non-return valve 490.

In such way, during the first heating step, the three-way diverting withdrawal valve 464 keeps the inlet C1 closed and the recirculation inlet B1 open, while the three-way mixing valve 465 keeps both the first inlet A2 and the recirculation outlet AB2 open, and the second inlet B2 closed, until the temperature of the heated secondary fluid coming from said second recirculating portion 48 reaches said second preset temperature T2.

The secondary fluid present in the secondary circuit 4 therefore flows with a recirculation flow from said thermal exchange portion 42 towards said third recirculating portion 48, enters said first inlet A2 and is sent from said recirculation outlet AB2 towards said recirculation inlet B1 of said three-way diverting withdrawal valve 464 through said recirculating portion 47. Such secondary fluid is then sent to the inlet of the thermal exchange portion 42, passing through the outlet A1 of the three-way diverting withdrawal valve 464.

Once the three-way mixing valve 465 registers that said second preset temperature T2 has been reached by the recirculating secondary fluid, being configured to keep the secondary fluid flow coming out of said outlet AB2 at a temperature less or equal to said second preset temperature T2, it partially opens the second inlet B2 and, at the same time, partially closes the first inlet A2, being said opening and closing proportional with each other and both proportional to the difference between said second preset temperature T2 and the temperature of the secondary fluid in the recirculating portion 47. As a consequence of this, a flow is established through the withdrawal portion 41 and consequently, being the tank 2 of the closed vessel type, under pressure, a flow of equal flow rate is established through the intake portion 44'.

In particular, the temperature of the secondary fluid in said upper intake portion 44', which is the same as said recirculating portion 48, is greater than said second preset temperature T2. Therefore, it is obtained that the heated secondary fluid is introduced into said tank 2, through said upper intake portion 44', at a temperature always greater than or equal to said second preset temperature T2, in turn greater than or equal to said first preset temperature T1.

The step of heating the secondary fluid in said upper volume V1 therefore provides that the secondary fluid heated to a temperature greater than or equal to said second preset temperature T2, continues to be introduced into said upper volume V1 until said first preset temperature T1 has been reached at said first detecting height S1.

Once the temperature detecting means 45 have registered that said first preset temperature T1 at said first detecting height S1 has been reached, the second heating step starts, during which the controlling means send a signal to said three-way diverting withdrawal valve 464, which opens the inlet C1 and closes the recirculation inlet B1.

Therefore, all the flow of secondary fluid circulating in the secondary circuit 4 passes from said withdrawal portion 41 towards said three-way withdrawal valve 464, without being mixed with the secondary fluid heated in said thermal exchange portion 42, before going into said thermal exchange portion 42 towards said intake portion 44'. In fact, the flow through the recirculating portion 47 is precluded by the closure of the recirculation inlet B1 and the flow through the further withdrawal portion 49 is precluded by the non-return valve 490.

In other words, since the tank 2 is of the closed vessel type, the same three-way diverting withdrawal valve 464 allows the three-way mixing valve 465 to be excluded from the circulation of fluid during the second step, without requiring a further bypass and resulting in savings in space and production costs.

Then the heated secondary fluid is introduced at said lower volume V2 at a temperature initially less than or equal to said second preset temperature T2 and, due to the absence of a preheating with recirculation, said temperature of the heated secondary fluid is also lower compared to the first preset temperature T1 reached in the upper volume V1. Therefore the heated secondary fluid which is re-introduced into the lower volume V2 of said tank 2 at said intermediate height H1, being less hot and heavier than the secondary fluid heated in said upper volume V1, cannot rise and mix with the former, nor mix with the secondary fluid contained in the intermediate portion 23, thanks to the presence of a diffuser element 9, better illustrated below.

The secondary fluid then gradually heats up inside the lower volume V2 of the tank 2 upon repetition of the heating cycle described above until the final heating temperature Tf has been reached, without perturbing the thermal stratification of the secondary fluid heated inside said upper portion 21, ensuring the preservation of the thermal stratification inside the tank 2.

Such circulation has the same advantages as the embodiment previously illustrated for Figures 3 and 9, since the secondary fluid in said lower volume V2 is gradually heated, allowing to follow the exchange protocols proper of the generator and in particular of the heat pumps, for obtaining the best efficiency, avoiding the continuous control of temperature and flow rate of the fluids which can lead to reductions in the operating efficiency of such generators.

Furthermore, the thermal exchange system 1 shown in figure 4 comprises a single intake portion 44' arranged at said intermediate height H1.

In fact, in said first configuration it is possible to avoid the presence of the intake portion 43 for the introduction of secondary fluid at the top 210 of the tank 2, using an internal duct 6, provided at its terminal end with a "diffuser" device. In particular, the term "diffuser" means any device used for introducing a fluid into a volume of the same fluid, adapted to achieve a controlled "diffusion" in order to prevent the introduced fluid flow from creating turbulences and mixing motions that could perturb the thermal stratification of the surrounding fluid and to favor the natural tendency of said introduce fluid to be arranged at the level of the surrounding fluid at its own temperature, in order to preserve the thermal stratification inside said volume wherein it is introduced.

By way of example, but not limited to, such diffuser element can be a duct with holes made specifically to separate, divert and slow down said flow of the fluid introduced, possibly carrying a second duct inside, so as to create a path inside it for the introduced fluid that further slows down the flow.

In particular, the intake portion 44' of the embodiment of Figure 4 is connected to a single internal duct 6, for introducing the secondary fluid at said intermediate height H1 during both heating step.

The internal duct 6 shown in Figure 4 comprises the terminal end at said intermediate height H1 and the other end at the top 210 of the tank 2. In another embodiment (not shown), this internal duct can have the second end arranged in any other inlet point of said tank 2.

Furthermore, in the embodiment of the thermal exchange system 1 shown in Figure 4, the tank 2 comprises diffuser means, in particular a diffuser element 9 connected to the terminal end of said internal duct 6, at said intermediate portion 23 of said tank 2, to favor the natural tendency of the introduced secondary fluid to be arranged at the level of the secondary fluid at its own temperature without perturbing the thermal stratification of the surrounding secondary fluid.

When a heated secondary fluid is introduced at said intermediate height, if the upper volume V1 has a lower temperature than the temperature at which it was heated, such introduced secondary fluid, being warmer and lighter, will tend to be arranged higher than such upper volume V1, without mixing with the secondary fluid contained in the lower portion 22 thanks to the presence of said diffuser element 9. Therefore, the secondary fluid is thermally stratified in the upper volume V1 in the upper portion 21 of said tank 2. Vice versa, if the heated secondary fluid is introduced at said intermediate height H1 at a temperature less than that of the upper volume V1, being such introduced secondary fluid less hot and heavier, it will be arranged in the lower portion of such upper volume V1, without rising and mixing with the former, always due to the effect of said diffuser element 9, thus preserving the thermal stratification inside the tank 2.

The presence of the first internal duct 6 in such embodiment is particularly advantageous, since, thanks to the effect of said diffuser element 9, it is possible to create a single internal intake duct 6, avoiding two connections at different heights.

Thanks to the described measures, the thermal exchange system 1 made in the configuration of Figure 4 can advantageously have smaller dimensions, if compared to the tank 2 of the embodiment of Figures 3 and 9 which has a secondary circuit 4 connected in different points of the tank 2 and comprising a bypass portion 410, since the hydraulic connection of the tank 2 to the secondary circuit 4, can be made completely at one end thereof (as for the embodiment of Figure 9), which can be the top 210 or any other end of the tank 2, also facilitating the maintenance of the thermal exchange system 1.

In alternative embodiments of the thermal exchange system 1 according to the present invention (not shown in the figures), there may be two distinct intake portions 43, 44 as for the embodiments of Figures 1 - 3, wherein the first intake portion 43 can be positioned at an intermediate point of said upper volume V1, using suitable devices adapted to avoid mixing and preserve the thermal stratification of the secondary fluid inside said upper volume V1 while introducing the heated fluid through said intake portion 43, such as for example suitable flow diffuser elements as previously described.

In a further variant of the thermal exchange system 1 according to the present invention (not shown in the Figures), the tank 2 can be split at predetermined intermediate heights into more than two portions, the temperature detecting means being at each predetermined intermediate height, and an intake portion and a withdrawal portion being present for each predetermined intermediate height controlled by said flow control means, so as to obtain a fluid heated with multiple heating steps and stratified in multiple stratification zones.

A thermal exchange system 1 according to the present invention can also comprise flow detecting means F, for detecting the flow of the primary fluid inside said thermal exchanger 3 and further controlling means connected to said flow detecting means F and to said circulator 5, for activating said circulator 5 in presence of the primary fluid flow. An example of such flow detecting means and further controlling means can be a flow sensor F. Thanks to the presence of said flow detecting means and of said further controlling means it is advantageously possible to optimise the operation of the thermal exchange system 1, without requiring a control signal from the generator, even if the thermal exchanger 3 depends on discontinuous or limited heat sources, such as for example solar thermal, biomass generators, heat pump generators and the like.

Finally, the tank 2 can also comprise further temperature detecting means (not shown in the figures) arranged at the bottom 220 or the top 210, for example at a second detecting height S2, for checking the heating or cooling of the entire volume of secondary fluid at the desired temperatures and consequently controlling the activation and shutdown of the generator/s.

In summary, a method of heating a secondary fluid inside a thermal exchange system 1 according to the present invention, in particular applicable to the embodiments of Figures 1 - 4, 8 and 9, includes the following steps:
A. withdrawing the secondary fluid to be heated from the tank 2 with a flow rate and heating it by thermal exchange with the thermal exchanger 3;
B. detecting the temperature of the secondary fluid at said first detecting height S1 by means of temperature detecting means 45, and, if the temperature of the secondary fluid at said first detecting height S1 is less than a first preset temperature T1, introducing the heated secondary fluid into said tank 2 so as to heat and thermally stratify the fluid contained in said upper volume V1;
C. detecting the temperature of the secondary fluid at said first detecting height S1 by means of temperature detecting means 45, and, if the temperature of the secondary fluid at said first detecting height S1 is greater than or equal to the first preset temperature T1, introducing the secondary fluid heated by means of said thermal exchanger 3 at said intermediate height H1, with a temperature initially less or equal than the first preset temperature T1, so as not to perturb the thermal stratification in the upper volume V1 and then gradually increasing (as the heating cycle is repeated), until a final heating temperature Tf has been reached, so as to create the fluid stratification also in said lower volume V2.

Preferably said intermediate height H1 is lower than said first detecting height S1.

Alternatively, said first detecting height S1 can coincide with said intermediate height H1.

In the case of heating of the secondary fluid in a thermal exchange system of the type shown in Figure 1 or 2, the withdrawal of the secondary fluid to be heated is carried out by dividing the step A. into the following sub-steps:
A1. if the temperature of the secondary fluid at said first detecting height S1 is less than the first preset temperature T1, the secondary fluid to be heated is withdrawn from the upper volume V1 at said intermediate height H1; in this case, in step B the heated secondary fluid is re-introduced into the upper volume V1, so as to achieve the heating and the natural stratification of the fluid in the volume V1 contained in the upper portion 21 of said tank 2.
A2. Otherwise, if the temperature of the secondary fluid at said first detecting height S1 is greater than or equal to the first preset temperature T1, the secondary fluid to be heated is withdrawn from the lower volume V2 at the bottom 220.

In this case, in step C, the heated secondary fluid is introduced into the lower volume V2, so as to achieve the gradual heating until the final heating temperature Tf has been reached and the natural stratification of the secondary fluid in the lower volume V2 contained in the lower portion 22 of said tank 2.

In the case of heating of the secondary fluid in a thermal exchange system 1 of the type shown in Figures 3, 4, 8 and 9, the withdrawal of secondary fluid to be heated from the tank 2 can also take place only at the bottom 220 of the tank 2, or in other points of the lower portion 22 of the tank 2, and, in this case, the aforesaid steps A., B. and C. are carried out as follows.

In particular, the step A. includes the following sub-steps:
A3: before the step B., if the temperature of the secondary fluid at said first detecting height S1 is less than the first preset temperature T1 and until the fluid temperature heated by said thermal exchanger 3 is less than a second preset temperature T2, greater than or equal to said first preset temperature T1, the heated secondary fluid is recirculated in said thermal exchanger 3, to heat it further, without any secondary fluid being withdrawn from the tank 2;
A4. simultaneously with the step B., if the temperature of the secondary fluid at said first detecting height S1 is less than the first preset temperature T1 and if the fluid temperature heated by said thermal exchanger 3 is greater than or equal to said second preset temperature T2, the secondary fluid is withdrawn from the tank 2 and, at least one part of the heated secondary fluid is introduced into the tank 2, while the remaining part of the heated secondary fluid is mixed with the withdrawn secondary fluid and, through the recirculating portions of the secondary circuit 4, it is sent again to said thermal exchanger 3, to heat it. In such embodiment, in the step B., the heated secondary fluid is therefore introduced into the tank 2 at a temperature greater than or equal to both said preset temperatures T1 and T2, thus carrying out the heating and the natural stratification of the fluid in the volume V1 contained in the upper portion 21 of said tank 2.

Always in the step A., in such embodiment, when the temperature of the secondary fluid at said first detecting height S1 is greater than or equal to the first preset temperature T1, a further sub-step A5 is provided, wherein the fluid withdrawn from the tank 2 is entirely sent to said thermal exchanger 3, without being mixed with the heated secondary fluid coming from said thermal exchange portion 42, which, therefore, in the step C is fully introduced into the tank 2. In this way, when the described cycle is repeated starting from the step A5, the fluid in the contained volume V2 is gradually heated until the final temperature Tf has been reached, thus creating the natural stratification also in said lower volume V2 and therefore in said tank 2.

Similarly, a method of cooling a secondary fluid inside a thermal exchange system 1 according to the present invention, and shown with reference to Figures 5 - 7, includes the following steps:
A. withdrawing the secondary fluid to be cooled from the tank 2 with a flow rate and cooling it by thermal exchange with the thermal exchanger 3,
B. detecting the temperature of the secondary fluid at said first detecting height S1 by means of temperature detecting means 45, and if the temperature of the secondary fluid at said first detecting height S1 is greater than the first preset temperature T1, introducing the cooled secondary fluid into said tank 2 in said lower volume V2 so as to cool and thermally stratify the fluid contained in said lower volume V2;
C. if the temperature of the secondary fluid at said first detecting height S1 is less than or equal to the first preset temperature T1, introducing the cooled secondary fluid by means of said thermal exchanger 3 at said intermediate height H1, with a temperature initially greater than or equal to the first preset temperature T1, so as not to perturb the thermal stratification in the lower volume V2 and then gradually decreasing (as the cooling cycle is repeated), until a final cooling temperature Tf has been reached, so as to create the fluid stratification also in said upper volume V1.

Preferably, said intermediate height H1 is higher than said first detecting height S1. Alternatively, said intermediate height H1 can coincide with said first detecting height S1.

Furthermore, in the case of cooling of the secondary fluid in a thermal exchange system 1 of the type shown in one of Figures 5 - 7, the withdrawal of the secondary fluid to be heated is carried out as follows.

In particular, the step A. can be divided into the following sub-steps:
A1. if the temperature of the secondary fluid at said first detecting height S1 is higher than the first preset temperature T1, withdrawing the secondary fluid to be cooled from the lower volume V2 at said intermediate height H1.

In this case, in the step B., the cooled secondary fluid is introduced into the lower volume V2 of said tank 2, so as to achieve the cooling and the natural stratification of the secondary fluid in the lower volume V2 contained in the lower portion 22 of said tank 2.

A2. otherwise, if the temperature of the secondary fluid at said first detecting height S1 has reached or fallen below the first preset temperature T1, the secondary fluid to be cooled is withdrawn from the upper volume V1 at the top 210 of said tank 2.

In this case, in the step C., the secondary fluid is cooled and re-introduced into the upper volume V1, at said intermediate height H1, so as to achieve said gradual cooling until said final cooling temperature Tf has been reached and the natural stratification of the secondary fluid in the upper volume V1 contained in the upper portion 21 of said tank 2.

The thermal exchange system 1 and the method of heating or cooling and stratification of a secondary fluid just described exploit the natural thermal stratification of fluids, so that the hottest fluid is arranged in the upper part, while the colder one is arranged in the lower part, and therefore they allow the thermal exchange to take place in two steps, wherein:
in the first step the thermal exchange takes place exclusively with the secondary fluid contained in the first volume of the tank, without affecting the secondary fluid contained in the second volume of the tank; and
in the second step the thermal exchange takes place exclusively with the secondary fluid contained in the second volume of the tank, without affecting the secondary fluid contained in the first volume of the tank.

The thermal exchange system 1 and the method for heating or cooling a secondary fluid and for the stratification of said secondary fluid just described allow to advantageously obtain a secondary fluid heated or cooled and stratified inside a tank 2, wherein the thermal stratification is preserved, as mixing motions are avoided.

Furthermore, with respect to the prior art thermal exchange systems, the heating or cooling of the secondary fluid inside each volume portion of the tank 2 can take place in a short time, since in each step the part of secondary fluid to be heated or to be cooled is a portion of the total secondary fluid present inside the tank 2.

Furthermore, in the case of use of heat pump generators connected to the thermal exchanger 3, it is advantageously possible to take advantage of the efficiency of this type of generators, since the "partialized" heating "in zones" of the secondary fluid contained inside said tank 2 allows to gradually reach the predetermined temperature of the secondary fluid in each part of the tank 2. In particular, this allows the heat pump generators to implement exchange protocols which can vary the thermal power delivered and exchanged in the thermal exchanger 3 in the different steps, according to the thermodynamic conditions of the exchange, such as temperature and flow rate of the secondary fluid, to obtain the best efficiency.

Such method of thermal exchange is particularly advantageous, as obtaining a heated or cooled and stratified secondary fluid in a short time and taking advantage of the efficiency of heat pump generators are generally conflicting factors. In fact, the heating or cooling rapidity usually requires the fluid to be rapidly brought to the desired temperature, while the efficiency of the heat pump increases if the heating or cooling process is gradual, which implies long thermal exchange times to bring the entire accumulation volume to the desired temperature.

A further advantage is that with the thermal exchange system just described, it is possible to ensure a rapid availability of secondary fluid at the desired temperature and in an amount that can be adapted by varying said intermediate height H1, since the heated secondary fluid present in the upper portion 21, in addition to being available in a short time, can also be used during the steps of heating the secondary fluid in the lower portion 22. Similarly, in case of cooling, the cooled secondary fluid present in the lower portion 22, in addition to being available in a short time, can also be used during the cooling steps of the secondary fluid in the upper portion 21.

Finally, in the case it is not necessary to heat or cool the entire volume of secondary liquid contained in the tank 2, for example in the case of discontinuous, occasional or periodic use of said fluid, the thermal exchange system 1 just described allows to limit the heating to the upper portion 21 only or the cooling to the lower portion 22 only, said portions being able to be adapted to the needs, by varying said intermediate height H1, with consequent considerable energy savings.

Such possibility is particularly advantageous in the case where the thermal energy sources connected to the thermal exchanger 3 are discontinuous or limited (such as the solar thermal), as it guarantees the achievement of the desired temperature (and therefore of at least one part of liquid available for use) even if the energy supply of the source in question is not sufficient for heating or cooling the entire volume of secondary liquid contained in the tank 2.

In the foregoing, the preferred embodiments have been described and variants of the present invention have been suggested, but it is to be understood that those skilled in the art will be able to make modifications and changes without thereby departing from the relative scope of protection, as defined by the attached claims.

## Claims

1. Thermal exchange system (1) for the thermal stratification of a secondary fluid inside a tank (2), said thermal exchange system (1) including:
a closed vessel tank (2) for said secondary fluid having two end walls (210; 220), opposite to each other, inside said tank (2) at least two end portions (21, 22) being provided, including a first end portion (21; 22) at a first (210; 220) of said two first end walls (210, 220), a second end portion (22; 21) at a second (220; 210) of said two end walls (210, 220) and at least one intermediate portion (23) arranged at an intermediate height (H1) of said tank (2) such as to split said tank into at least two volumes (V1, V2), of which a first volume (V1; V2) comprised between said first end portion (21; 22) and said intermediate portion (23) and a second volume (V2; V1) comprised between said second end portion (22; 21) and said intermediate portion (23);
a thermal exchanger (3) for heating or cooling said secondary fluid, and
a secondary circuit (4), for circulating said secondary fluid from said tank (2) towards said thermal exchanger (3) and vice versa,
wherein said secondary circuit (4) comprises:
at least one withdrawal portion (41', 41"; 41) in fluidic connection with said tank (2), for withdrawing said secondary fluid contained in said tank (2),
at least one intermediate intake portion (44; 44'), in fluidic connection with said tank (2) at said intermediate height (H1), for introducing said secondary fluid into said tank (2),
a thermal exchange portion (42), comprising an inlet in fluidic connection with said at least one withdrawal portion (41', 41"; 41) and an outlet in fluidic connection with said intermediate intake portion (44; 44'), said thermal exchange portion (42) being adapted to carry out a thermal exchange with said thermal exchanger (3), for heating or cooling said secondary fluid,
temperature detecting means (45), arranged in said tank (2) at a detecting height (S1), preferably at said intermediate portion (23), and
flow control means (460, 461; 462, 461, 463; 462, 466; 464, 465) inside said secondary circuit (4), said flow control means (460, 461; 462, 461, 463; 462, 466; 464, 465) being configured for acting on said secondary circuit (4) according to the temperature detected by said temperature detecting means (45) for changing from a first configuration for the stratified heating or cooling of said secondary fluid in said first volume (V1; V2) to a second configuration for the stratified heating or cooling of said secondary fluid in said second volume (V2; V1),
said thermal exchange system (1) being **characterized in that** said secondary circuit (4) further comprises a first internal duct (6) which fluidically connects said thermal exchange portion (42) with said intermediate intake portion (44; 44'), said first internal duct (6) being arranged inside said tank (2), going from a first end wall (210; 220) of said tank (2) and ending at said intermediate height (H1).

2. Thermal exchange system (1) according to claim 1, **characterised in that**
said first volume (V1; V2) is an upper volume (V1) of said tank (2) and said second volume (V2; V1) is a lower volume (V2) of said tank (2),
said detecting height (S1) coincides with said intermediate height (H1) or is above it, and
said flow control means (460,461;462, 461,463; 462, 466; 464, 465) are adapted to act on said secondary circuit (4) according to the temperature detected by said temperature detecting means (45) for changing from a first configuration for the stratified heating of said secondary fluid in said upper volume (V1) to a second configuration for the stratified heating of said secondary fluid in said lower volume (V2).

3. Thermal exchange system (1) according to claim 1, **characterised in that**
said first volume (V1; V2) is a lower volume (V2) of said tank (2) and said second volume (V2; V1) is an upper volume (V1) of said tank (2),
said first detecting height (S1) coincides with said intermediate height (H1) or is below it, and
said flow control means (460, 461) are adapted to act on said secondary circuit (4) according to the temperature detected by said temperature detecting means (45) for changing from a first configuration for the stratified cooling of said secondary fluid in said lower volume (V2) to a second configuration for the stratified cooling of said secondary fluid in said upper volume (V1).

4. Thermal exchange system (1) according to any one of the preceding claims, **characterised in that** said secondary circuit (4) comprises
a first intake portion (43) in fluidic connection with said tank (2) at said first end portion (21; 22) of said tank (2), and
said intermediate intake portion (44), and **in that**
said flow control means (460, 461; 462, 461, 463) comprise a three-way diverting intake valve (461) comprising
an inlet (A1) in fluidic connection with the outlet of said thermal exchange portion (42) to receive the heated or cooled secondary fluid coming from said thermal exchanger (3),
a first outlet (B1) for said heated or cooled secondary fluid, in fluidic connection with said first intake portion (43), and
a second outlet (C1) for said heated or cooled secondary fluid, in fluidic connection with said intermediate intake portion (44), and **in that** when said circuit (4) is in said first configuration, said three-way diverting intake valve (461) has said inlet (A1) open, said first outlet (B1) open and said second outlet (C1) closed and when said circuit (4) is in said second configuration, said three-way diverting intake valve (461) has said inlet (A1) open, said first outlet (B1) closed and said second outlet (C1) open.

5. Thermal exchange system (1) according to any one of the preceding claims, **characterised in that** said secondary circuit (4) further comprises a second internal duct (7; 8) arranged inside said tank (2) and ending at said first end wall (210; 220), said second internal duct (7; 8) fluidically connecting said second end portion (22; 21) of said tank (2) with said thermal exchange portion (42).

6. Thermal exchange system (1) according to the preceding claim, **characterised in that** said second internal duct (8) fluidically connects said second end portion (22) of said tank (2) with said outlet of said thermal exchange portion (42).

7. Thermal exchange system (1) according to claim 5, **characterised in that** said second internal duct (7) fluidically connects said second end portion (22; 21) of said tank (2) with said inlet of said thermal exchange portion (42).

8. Thermal exchange system (1) according to any one of the preceding claims, **characterised in that** said secondary circuit (4) further comprises
a first withdrawal portion (41'), in fluidic connection with said tank (2) through said internal duct (6) at said intermediate portion (23); and
a second withdrawal portion (41 "), in fluidic connection with said tank (2) at said second end portion (22; 21) of said tank (2), **in that**
said flow control means (460, 461) comprise a three-way diverting withdrawal valve (460) comprising a first inlet (A2) in fluidic connection with said first withdrawal portion (41'),
a second inlet (B2) in fluidic connection with said second withdrawal portion (41"), and
an outlet (C2) in fluidic connection with the inlet of said thermal exchange portion (42), and **in that**
when said circuit (4) is in said first configuration, said three-way diverting withdrawal valve (460) has said outlet (C2) open, said first inlet (A2) open and said second inlet (B2) closed and when said circuit (4) is in said second configuration, said three-way diverting withdrawal valve (460) has said outlet (C2) open, said first inlet (A2) closed and said second inlet (B2) open.

9. Thermal exchange system (1) according to the preceding claim, **characterised in that** said first internal duct (6) connects said intermediate portion (23) of said tank (2) also with said first withdrawal portion (41').

10. Thermal exchange system (1) according to claim 2 or according to claims 2 and 4, **characterised in that** said secondary circuit (4) comprises
only one withdrawal portion (41) arranged at said end portion (22),
at least one recirculating portion (47) for the recirculation of said secondary fluid between the outlet of said thermal exchange portion (42) and the inlet of said thermal exchange portion (42); and
further temperature detecting means, for detecting the temperature of said secondary fluid exiting from said thermal exchange portion (42), said further temperature detecting means being configured so that, when said secondary circuit (4) is in said first configuration, said secondary fluid exiting from said thermal exchange portion (42) is sent, at least in part, towards said inlet of said thermal exchange portion (42), passing through said recirculating portion (47), according to the temperature detected by means of said further temperature detecting means.

11. Thermal exchange system (1) according to the preceding claim, **characterised in that** said flow control means (462, 461, 463; 462, 466) comprise a three-way mixing valve (462), wherein
said recirculating portion (47) is in fluidic connection with said first intake portion (43), wherein
said flow control means (461; 462) control the fluid flow from said thermal exchange portion (42) towards said intake (43) and recirculating (47) portions, and wherein
said first intake portion (43) comprises a non-return valve (431) downstream of the connection with said recirculating portion (47) for preventing the withdrawal of secondary fluid from said tank (2), and wherein
said three-way mixing valve (462) comprises
a first inlet (A2) in fluidic connection with said recirculating portion (47),
a second inlet (B2) in fluidic connection with said withdrawal portion (41), and
an outlet (AB2) in fluidic connection with the inlet of said thermal exchange portion (42), and
**in that**,
when said secondary circuit (4) is in said first configuration, said three-way mixing valve (462) is configured for fully or partially opening said first inlet (A2) and for fully or partially closing said second inlet (B2) proportionally to the opening of said first inlet (A2) and vice versa, according to the temperature detected by said further temperature detecting means, so as to mix said secondary fluid coming from said withdrawal portion (41) with said heated secondary fluid coming from said recirculating portion (47); and
when said secondary circuit (4) is in said second configuration,
said recirculating (47) and intake (43) portions are closed by the action of said flow control means (461; 462) and by means of said non-return valve (431) which prevents the secondary fluid from flowing from said tank (2) towards said first inlet (A2), so as to prevent the fluid from entering said three-way mixing valve (462) through said first inlet (A2).

12. Thermal exchange system (1) according to the preceding claim, **characterised in that** said secondary circuit (4) comprises a bypass valve (463) in fluidic connection with said withdrawal portion (43) and the inlet of said thermal exchange portion (42) and **in that**
when said secondary circuit (4) is in said first configuration said bypass valve (463) is closed so that said secondary fluid cannot pass through it, and
when said secondary circuit (4) is in said second configuration said bypass valve (463) is open so that said secondary fluid can pass through it bypassing said three-way mixing valve (462).

13. Thermal exchange system (1) according to claims 2 and 10, **characterised in that**
said flow control means comprise a three-way diverting withdrawal valve (464) and a three-way mixing valve (465), wherein
said secondary circuit (4) comprises a further withdrawal portion (49), comprising a non-return valve (490), in fluidic connection between said withdrawal portion (41) and an inlet (B2) of said three-way mixing valve (465), wherein
the outlet of said thermal exchange portion (42) is in fluidic connection with at least one intermediate intake portion (44'), and wherein
said three-way diverting withdrawal valve (464) comprises
a first inlet (C1) in fluidic connection with said withdrawal portion (41),
a second inlet (B1) in fluidic connection with said recirculating portion (47), and
an outlet (A1) in fluidic connection with the inlet of said thermal exchange portion (42); and
said three-way mixing valve (465) comprises
a first inlet (B2) in fluidic connection with said withdrawal portion (41) through said further withdrawal portion (49);
a second inlet (A2) in fluidic connection with the outlet of said thermal exchange portion (42) and
an outlet (AB2) in fluidic connection with said recirculating portion (47); and **in that**
when said secondary circuit (4) is in said first configuration,
said three-way diverting withdrawal valve (464) has said first inlet (C1) closed, said second inlet (B1) open and said outlet (A1) open, and
said three-way mixing valve (465) has said outlet (AB2) open and is configured for fully or partially opening said first inlet (A2) and for fully or partially closing said second inlet (B2) proportionally to the opening of said first inlet (A2) and vice versa, according to the temperature detected by said further temperature detecting means, so as to mix said secondary fluid coming from said withdrawal portion (41) with said heated secondary fluid coming from said outlet of said thermal exchange portion (42); and
when said secondary circuit (4) is in said second configuration,
said three-way diverting withdrawal valve (464) has said first inlet (C1) open and said second inlet (B1) closed, so as to close said recirculating portion (47) and to prevent the secondary fluid from flowing through said three-way mixing valve (465), and
said non-return valve (490) prevents the secondary fluid from flowing through said further withdrawal portion (49) and the secondary fluid from being possibly recirculated from said first inlet (A2) of said mixing valve (465) towards said first inlet (C1) of said diverting valve (464).

14. Thermal exchange system (1) according to claim 7 and any of claims 10- 12, **characterised in that** said withdrawal portion (41) is in fluidic connection with said second end portion (22; 21) of said tank (2) through said second internal duct (7).

15. Thermal exchange system (1) according to any one of the preceding claims, **characterised in that** it comprises diffuser means (9), connected to the terminal end of said first internal duct (6), arranged in said tank (2) in said intermediate portion (23) at said at least one intake portion (44; 44'), for the diffusion and the thermal stratification in said first volume (V1; V2) of the secondary fluid introduced into said tank (2).

16. Thermal exchange system (1) according to any one of the preceding claims, **characterised in that** said tank (2) comprises at least two intermediate portions (23) at respective intermediate heights (H1),
wherein said secondary circuit (4) comprises
temperature detecting means (45) arranged at each intermediate height (H1) and
a respective intake portion (44; 44'), arranged at each intermediate height (H1), for heating or cooling said secondary fluid in said tank by means of multiple stratification.

17. Thermal exchange system (1) according to any one of the preceding claims, **characterised in that** said thermal exchanger (3) comprises a primary circuit for a primary heat transfer fluid, said primary circuit being in thermal connection with said thermal exchange portion (42) for heating or cooling said secondary fluid in said thermal exchanger (3),
and **in that** it comprises a flow sensor (F) in said primary circuit, said flow sensor (F) being configured to detect the presence of flow of said primary heat transfer fluid in said primary circuit and to interrupt the flow of said secondary fluid in said secondary circuit (4) in case of absence of flow of said primary fluid in said primary circuit.

18. Thermal exchange system (1) according to any one of the preceding claims, **characterised in that** said thermal exchanger (3) is connected to a thermal generator, preferably a heat-pump thermal generator.

19. Method for the thermal stratification of a secondary fluid inside a tank (2) of the thermal exchange system (1) according to any one of claims 1 - 18, wherein said secondary fluid occupies at least one first volume (V1; V2) and a second volume (V2; V1) of said tank (2), said first volume (V1; V2) and second volume (V2; V1) being in fluidic contact with each other at an intermediate portion (23) of said tank (2) arranged at an intermediate height (H1),
wherein said method comprises the following steps:
A. withdrawing the secondary fluid to be heated or cooled from said tank (2) and heating it or cooling it by means of a thermal exchanger (3);
B. detecting the temperature of the secondary fluid in said tank (2) at a first detecting height (S1) by means of temperature detecting means (45), and if the temperature of the secondary fluid at said first detecting height (S1) has not reached a first preset temperature (T1), introducing the heated or cooled secondary fluid in said tank (2), so that said first volume (V1; V2) of said secondary fluid in said tank (2) is heated or cooled in a stratified manner;
C. detecting the temperature of the secondary fluid at said first detecting height (S1) by means of temperature detecting means (45), and, if the temperature of the secondary fluid at said first detecting height (S1) has reached said first preset temperature (T1), introducing the secondary fluid into said tank (2) at said intermediate height (H1), so that said second volume (V2; V1) of said secondary fluid in said tank (2) is gradually heated or cooled in a stratified manner.

20. Method according to the preceding claim for heating said secondary fluid, **characterised in that** said secondary fluid is heated by means of said thermal exchanger (3);
in said step B. if the temperature of the secondary fluid at said first detecting height (S1) is less than said first preset temperature (T1), the heated secondary fluid is introduced into said tank (2) so that said first volume (V1) of said secondary fluid in said tank (2) is heated up to a first heating temperature, greater than or equal to said first preset temperature (T1), said first volume (V1) being arranged above said intermediate height (H1); and
in said step C., if the temperature of the secondary fluid at said first detecting height (S1) is greater than or equal to said first preset temperature (T1), the heated secondary fluid is introduced into said tank (2) at said intermediate height (H1), so that said second volume (V2) of said secondary fluid in said tank (2) is gradually heated until a final heating temperature (Tf) has been reached, said second volume (V2) being arranged below said intermediate height (H1).

21. Method according to the preceding claim, **characterised in that** said final heating temperature (Tf) is less than or equal to said first preset temperature (T1), preferably equal to it,
and **in that** in said step B. the secondary fluid is introduced into said tank (2) at an upper portion (21) of said tank (210), preferably at the top (210) of said tank (2).

22. Method according to any one of claims 20 - 21, **characterised in that** said step A. comprises the following sub-steps:
A1. if the temperature of said secondary fluid at said first detecting height (S1) is less than said first preset temperature (T1), withdrawing said secondary fluid to be heated at said intermediate height (H1); and
A2. if the temperature of said secondary fluid at said first detecting height (S1) is greater than or equal to said first preset temperature (T1), withdrawing said secondary fluid to be heated at a lower portion (22) of said tank, preferably at the bottom (220) of said tank (2).

23. Method according to any one of claims 20 - 22, **characterised in that**, in said step A., the following sub-steps are provided:
A3. before said step B., if the temperature of the secondary fluid heated by said thermal exchanger (3) is less than a second preset temperature (T2), wherein said second preset temperature (T2) is greater than or equal to said first preset temperature (T1), said heated secondary fluid is recirculated in said thermal exchanger (3), and
A4. simultaneously with said step B., if the temperature of the secondary fluid heated by said thermal exchanger (3) is greater than or equal to said second preset temperature (T2), at least one part of said heated secondary fluid is introduced into said tank (2) and the remaining part of said heated secondary fluid is recirculated in said thermal exchanger (3); and **in that**
A5. when the temperature of the secondary fluid at said first detecting height (S1) is greater than or equal to said first preset temperature (T1), said heated secondary fluid is not recirculated in said thermal exchanger (3) and is fully introduced into said tank (2).

24. Method according to claim 19 for cooling said secondary fluid, wherein said secondary fluid is cooled by means of said thermal exchanger (3);
in said step B. if the temperature of the secondary fluid at said first detecting height (S1) is greater than said first preset temperature (T1), the cooled secondary fluid is introduced into said tank (2) so that said first volume (V2) of said secondary fluid in said tank (2) is gradually cooled at a first cooling temperature, less than or equal to said first preset temperature (T1), said first volume (V2) being arranged below said intermediate height (H1); and
in said step C., if the temperature of the secondary fluid at said first detecting height (S1) is less than or equal to said first preset temperature (T1), the cooled secondary fluid is introduced into said tank (2) at said intermediate height (H1), so that said second volume (V1) of said secondary fluid in said tank (2) is gradually cooled until a final cooling temperature (Tf) has been reached, said second volume (V1) being arranged above said intermediate height (H1).

25. Method according to the preceding claim, **characterised in that** said final cooling temperature (Tf) is greater than or equal to said first preset temperature (T1), preferably equal to it,
and **in that** during said step B. the secondary fluid is introduced into said tank (2) at a lower portion (22) of said tank (2), preferably at the bottom (220) of said tank (2).

26. Method according to any one of claims 24 - 25, **characterised in that** said step A. comprises the following sub-steps:
A1. if the temperature of said secondary fluid at said first detecting height (S1) is greater than said first preset temperature (T1), withdrawing said secondary fluid to be cooled at said intermediate height (H1); and
A2. if the temperature of said secondary fluid at said first detecting height (S1) is less than or equal to said first preset temperature (T1), withdrawing said secondary fluid to be cooled at an upper portion (21) of said tank, preferably at the top (210) of said tank.

27. Method according to any one of claims 19 - 26, **characterised in that** said secondary fluid is heated or cooled by means of a thermal exchanger (3) comprising a primary circuit for a primary heat transfer fluid, and **in that** it comprises the following step, prior to said steps A. - C.:
D. checking the presence of the primary heat transfer fluid flow in said primary circuit, and, if present, proceeding with heating or cooling said secondary fluid.

## Patentansprüche

1. Thermisches Austauschsystem (1) für die thermische Schichtung eines Sekundärfluids in einem Tank (2), wobei das besagte thermische Austauschsystem (1) umfasst: einen geschlossenen Behältertank (2) für das besagte Sekundärfluid mit zwei einander gegenüberliegenden Endwänden (210; 220), wobei im Inneren des besagten Tanks (2) mindestens zwei Endabschnitte (21, 22) vorgesehen sind, darunter ein erster Endabschnitt (21; 22) an einer ersten (210; 220) der beiden besagten ersten Endwände (210, 220), ein zweiter Endabschnitt (22; 21) an einer zweiten (220; 210) der besagten beiden Endwände (210, 220) und mindestens einen Zwischenabschnitt (23), der in einer Zwischenhöhe (H1) des besagten Tanks (2) angeordnet ist, um den besagten Tank in mindestens zwei Volumina (V1, V2) zu teilen, worin sich ein erstes Volumen (V1; V2) befindet, das zwischen dem besagten ersten Endabschnitt (21; 22) und dem besagten Zwischenabschnitt (23) liegt, und ein zweites Volumen (V2; V1), das zwischen dem besagten zweiten Endabschnitt (22; 21) und dem besagten Zwischenabschnitt (23) liegt; einen Wärmetauscher (3) zum Erhitzen oder Kühlen des besagten Sekundärfluids, und einen Sekundärkreislauf (4) zum Wiedereinleiten des besagten Sekundärfluids vom besagten Tank (2) zum besagten Wärmetauscher (3) und umgekehrt, wobei der besagte Sekundärkreislauf (4) umfasst: mindestens einen Entnahmeabschnitt (41', 41"; 41), der in flüssiger Verbindung mit dem besagten Tank (2) steht, um das im besagten Tank (2) enthaltene besagte Sekundärfluid zu entnehmen, mindestens einen Zwischeneinlassabschnitt (44; 44'), der in flüssiger Verbindung mit dem besagten Tank (2) auf der besagten Zwischenhöhe (H1) steht, um das besagte Sekundärfluid in den besagten Tank (2) einzuleiten, einen Wärmetauscherabschnitt (42), der einen Einlass in flüssiger Verbindung mit dem besagten mindestens einen Entnahmeabschnitt (41', 41"; 41) und einen Auslass in flüssiger Verbindung mit dem besagten Zwischeneinlassabschnitt (44; 44') aufweist, wobei der besagte Wärmetauschabschnitt (42) geeignet ist, einen Wärmeaustausch mit dem besagten Wärmetauscher (3) durchzuführen, um das besagte Sekundärfluid zu erwärmen oder zu kühlen, eine Temperaturerfassungseinrichtung (45), die im besagten Tank (2) in einer Erfassungshöhe (S1), vorzugsweise an dem besagten Zwischenabschnitt (23) angeordnet ist, und Mittel zur Steuerung der Strömung (460, 461; 462, 461, 463; 462, 466; 464, 465) innerhalb des besagten Sekundärkreislaufs (4), wobei die besagten Mittel zur Steuerung der Strömung (460, 461; 462, 461, 463; 462, 466; 464, 465) so konfiguriert sind, dass sie auf den besagten Sekundärkreislauf (4) entsprechend der von den Temperaturerfassungsmitteln (45) erfassten Temperatur einwirken, um von einer ersten Konfiguration für die geschichtete Erwärmung oder Abkühlung des besagten Sekundärfluids im besagten ersten Volumen (V1; V2) zu einer zweiten Konfiguration für die geschichtete Erwärmung oder Abkühlung des besagten Sekundärfluids im besagten zweiten Volumen (V2; V1) zu gelangen, wobei das besagte Wärmetauschersystem (1) **dadurch gekennzeichnet ist, dass** der besagte Sekundärkreislauf (4) ferner eine erste interne Leitung (6) umfasst, die den besagten Wärmetauscherabschnitt (42) mit dem besagten Zwischeneinlassabschnitt (44; 44') strömungstechnisch verbindet, wobei die besagte erste interne Leitung (6) im Inneren des besagten Tanks (2) angeordnet ist, von einer ersten Endwand (210; 220) des besagten Tanks (2) ausgeht und in der besagten Zwischenhöhe (H1) endet.

2. Wärmeaustauschsystem (1) nach Anspruch 1, **dadurch gekennzeichnet, dass** das besagte erste Volumen (V1; V2) ein oberes Volumen (V1) des besagten Tanks (2) ist und das besagte zweite Volumen (V2; V1) ein unteres Volumen (V2) des besagten Tanks (2) ist, die besagte Erfassungshöhe (S1) mit der besagten Zwischenhöhe (H1) zusammenfällt oder darüber liegt und die besagten Mittel zur Steuerung der Strömung (460, 461; 462, 461, 463; 462, 466; 464, 465) geeignet sind, auf den besagten Sekundärkreislauf (4) je nach der durch die besagte Temperaturerfassungseinrichtung (45) erfassten Temperatur einzuwirken, um von einer ersten Konfiguration für die geschichtete Erwärmung des besagten Sekundärfluids im besagten oberen Volumen (V1) zu einer zweiten Konfiguration für die geschichtete Erwärmung des besagten Sekundärfluids im besagten unteren Volumen (V2) zu wechseln.

3. Wärmeaustauschsystem (1) nach Anspruch 1, **dadurch gekennzeichnet, dass** das besagte erste Volumen (V1; V2) ein unteres Volumen (V2) des besagten Tanks (2) ist und das besagte zweite Volumen (V2; V1) ein oberes Volumen (V1) des besagten Tanks (2) ist, die besagte erste Erfassungshöhe (S1) mit der besagten Zwischenhöhe (H1) übereinstimmt oder darunter liegt, und die besagten Mittel zur Steuerung der Strömung (460, 461) so beschaffen sind, dass sie auf den besagten Sekundärkreislauf (4) je nach der von den besagten Temperaturerfassungseinrichtungen (45) erfassten Temperatur einwirken, um von einer ersten Konfiguration für die geschichtete Kühlung des besagten Sekundärfluids im besagten unteren Volumen (V2) zu einer zweiten Konfiguration für die geschichtete Kühlung des besagten Sekundärfluids im besagten oberen Volumen (V1) zu wechseln.

4. Wärmetauschersystem (1) nach einem der vorhergehenden Ansprüche, **dadurch gekennzeichnet, dass** der besagte Sekundärkreislauf (4) umfasst: einen ersten Einlassabschnitt (43) in flüssiger Verbindung mit dem besagten Tank (2) an dem ersten Endabschnitt (21; 22) des besagten Tanks (2) und den besagten Zwischeneinlassabschnitt (44), und dass die besagten Mittel zur Steuerung der Strömung (460, 461; 462, 461, 463) ein Dreiwege-Umleitungs-Einlassventil (461) umfassen, das einen Einlass (A1) in flüssiger Verbindung mit dem Auslass des besagten Wärmetauscherabschnitts (42) zur Aufnahme des von dem besagten Wärmetauscher (3) kommenden erwärmten oder gekühlten Sekundärfluids umfasst, einen ersten Auslass (B1) für das besagte erwärmte oder gekühlte Sekundärfluid in flüssiger Verbindung mit dem besagten ersten Einlassabschnitt (43) und einen zweiten Auslass (C1) für das besagte erwärmte oder gekühlte Sekundärfluid, der in flüssiger Verbindung mit dem besagten Zwischeneinlassabschnitt (44) steht, und dass, wenn der besagte Kreislauf (4) in der besagten ersten Konfiguration ist, das besagte Dreiwege-Umleitungseinlassventil (461) den besagten Einlass (A1) offen, den besagten ersten Auslass (B1) offen und den besagten zweiten Auslass (C1) geschlossen hat, und wenn der besagte Kreislauf (4) in der besagten zweiten Konfiguration ist, das besagte Dreiwege-Umleitungseinlassventil (461) den besagten Einlass (A1) offen, den besagten ersten Auslass (B1) geschlossen und den besagten zweiten Auslass (C1) offen hat.

5. Wärmeaustauschsystem (1) nach einem der vorhergehenden Ansprüche, **dadurch gekennzeichnet, dass** der Sekundärkreislauf (4) ferner eine zweite interne Leitung (7; 8) umfasst, die innerhalb des besagten Tanks (2) angeordnet ist und an der ersten Endwand (210; 220) endet, wobei die zweite interne Leitung (7; 8) den zweiten Endabschnitt (22; 21) des besagten Tanks (2) mit dem Wärmeaustauschabschnitt (42) strömungstechnisch verbindet.

6. Wärmeaustauschsystem (1) nach dem vorhergehenden Anspruch, **dadurch gekennzeichnet, dass** die besagte zweite interne Leitung (8) den besagten zweiten Endabschnitt (22) des besagten Tanks (2) mit dem besagten Auslass des besagten Wärmeaustauschabschnitts (42) strömungstechnisch verbindet.

7. Wärmeaustauschsystem (1) nach Anspruch 5, **dadurch gekennzeichnet, dass** die besagte zweite interne Leitung (7) den besagten zweiten Endabschnitt (22; 21) des besagten Tanks (2) mit dem besagten Einlass des besagten Wärmeaustauschabschnitts (42) strömungstechnisch verbindet.

8. Wärmetauschersystem (1) nach einem der vorhergehenden Ansprüche, **dadurch gekennzeichnet, dass** der besagte Sekundärkreislauf (4) ferner umfasst: einen ersten Entnahmeabschnitt (41'), der über die innere Leitung (6) an dem Zwischenabschnitt (23) mit dem besagten Tank (2) in flüssiger Verbindung steht, und einen zweiten Entnahmeabschnitt (41"), der mit dem besagten Tank (2) an dem besagten zweiten Endabschnitt (22; 21) des Tanks (2) in Strömungsverbindung steht, und dadurch, dass die besagten Strömungssteuermittel (460, 461) ein Dreiwege-Umleitungs-Entnahmeventil (460) umfassen, das einen ersten Einlass (A2) in Strömungsverbindung mit dem besagten ersten Entnahmeabschnitt (41') umfasst, einen zweiten Einlass (B2) in Strömungsverbindung mit dem besagten zweiten Entnahmeabschnitt (41") und einen Auslass (C2) in Strömungsverbindung mit dem Einlass des besagten Wärmetauscherabschnitts (42), und dadurch, dass, wenn der besagte Kreislauf (4) in der besagten ersten Konfiguration ist, das besagte Dreiwege-Umleitungs-Entnahmeventil (460) den besagten Auslass (C2) offen, den besagten ersten Einlass (A2) offen und den besagten zweiten Einlass (B2) geschlossen hat, und dass, wenn der besagte Kreislauf (4) in der besagten zweiten Konfiguration ist, das besagte Dreiwege-Umleitungs-Entnahmeventil (460) den besagten Auslass (C2) offen, den besagten ersten Einlass (A2) geschlossen und den besagten zweiten Einlass (B2) offen hat.

9. Wärmeaustauschsystem (1) nach dem vorhergehenden Anspruch, **dadurch gekennzeichnet, dass** die besagte erste innere Leitung (6) den besagten Zwischenbereich (23) des besagten Tanks (2) auch mit dem besagten ersten Entnahmebereich (41') verbindet.

10. Wärmetauschersystem (1) nach Anspruch 2 oder nach den Ansprüchen 2 und 4, **dadurch gekennzeichnet, dass** der besagte Sekundärkreislauf (4) nur einen Entnahmeabschnitt (41) umfasst, der an dem besagten Endabschnitt (22) angeordnet ist, und mindestens einen Rezirkulationsabschnitt (47) für die Rezirkulation des besagten Sekundärfluids zwischen dem Auslass des besagten Wärmetauscherabschnitts (42) und dem Einlass des besagten Wärmetauscherabschnitts (42) umfasst; und eine weitere Temperaturerfassungseinrichtung zum Erfassen der Temperatur des aus dem besagten Wärmetauscherabschnitt (42) austretenden besagten Sekundärfluids umfasst, wobei die besagte weitere Temperaturerfassungseinrichtung so konfiguriert ist, dass, wenn sich der besagte Sekundärkreislauf (4) in der besagten ersten Konfiguration befindet, das aus dem besagten Wärmetauscherabschnitt (42) austretende besagte Sekundärfluid zumindest teilweise in Richtung des besagten Einlasses des besagten Wärmetauscherabschnitts (42) geleitet wird, wobei es durch den besagten Rezirkulationsabschnitt (47) geleitet wird, entsprechend der mittels der besagten weiteren Temperaturerfassungseinrichtung erfassten Temperatur.

11. Wärmetauschersystem (1) nach dem vorhergehenden Anspruch, **dadurch gekennzeichnet, dass** die besagten Mittel zur Steuerung der Strömung (462, 461, 463; 462, 466) ein Drei-Wege-Mischventil (462) umfassen, wobei der besagte Rezirkulationsabschnitt (47) in flüssiger Verbindung mit dem besagten ersten Einlassabschnitt (43) steht, wobei die besagten Mittel zur Steuerung der Strömung (461; 462) den Flüssigkeitsstrom von dem besagten Wärmetauschabschnitt (42) zu dem besagten Einlassabschnitt (43) und Rückführungsabschnitt (47) steuern, und wobei der besagte erste Einlassabschnitt (43) ein Rückschlagventil (431) stromabwärts der Verbindung mit dem besagten Rückführungsabschnitt (47) umfasst, um die Entnahme von Sekundärfluid aus dem besagten Tank (2) zu verhindern, und wobei das besagte Dreiwege-Mischventil (462) umfasst: einen ersten Einlass (A2) in flüssiger Verbindung mit dem besagten Rückführungsabschnitt (47), einen zweiten Einlass (B2), der in flüssiger Verbindung mit dem besagten Rückführungsabschnitt (41) steht, und einen Auslass (AB2), der in flüssiger Verbindung mit dem Einlass des besagten Wärmetauscherabschnitts (42) steht, und dadurch, dass, wenn sich der besagte Sekundärkreislauf (4) in der besagten ersten Konfiguration befindet, das besagte Drei-Wege-Mischventil (462) so konfiguriert ist, dass es den besagten ersten Einlass (A2) vollständig oder teilweise öffnet und den besagten zweiten Einlass (B2) proportional zur Öffnung des ersten Einlasses (A2) vollständig oder teilweise schließt und umgekehrt, entsprechend der von der besagten weiteren Temperaturerfassungseinrichtung erfassten Temperatur, um das von dem besagten Entnahmeabschnitt (41) kommende besagte Sekundärfluid mit dem von dem besagten Rückführungsabschnitt (47) kommenden besagten erwärmten Sekundärfluid zu mischen; und wenn sich der besagte Sekundärkreislauf (4) in der besagten zweiten Konfiguration befindet, werden die besagten Rückführungsabschnitte (47) und Einlassabschnitte (43) durch die Wirkung der besagten Strömungssteuerungseinrichtung (461; 462) und durch das besagte Rückschlagventil (431) geschlossen, das verhindert, dass das besagte Sekundärfluid von dem besagten Tank (2) zu dem besagten ersten Einlass (A2) fließt, um so zu verhindern, dass die Flüssigkeit durch den besagten ersten Einlass (A2) in das besagte Dreiwege-Mischventil (462) gelangt.

12. Wärmetauschersystem (1) nach dem vorhergehenden Anspruch, **dadurch gekennzeichnet, dass** der besagte Sekundärkreislauf (4) ein Bypass-Ventil (463) umfasst, das in flüssiger Verbindung mit dem besagten Entnahmeabschnitt (43) und dem Einlass des besagten Wärmetauscherabschnitts (42) steht, und dadurch, dass, wenn sich der besagte Sekundärkreislauf (4) in der besagten ersten Konfiguration befindet, das besagte Bypass-Ventil (463) geschlossen ist, so dass das besagte Sekundärfluid nicht hindurchfließen kann, und wenn sich der besagte Sekundärkreislauf (4) in der besagten zweiten Konfiguration befindet, das besagte Bypass-Ventil (463) offen ist, so dass das besagte Sekundärfluid unter Umgehung des besagten Drei-Wege-Mischventils (462) hindurchfließen kann.

13. Wärmetauschersystem (1) nach Anspruch 2 und 10, **dadurch gekennzeichnet, dass** die besagten Mittel zur Steuerung der Strömung ein Dreiwege-Umleitungs-Entnahmeventil (464) und ein Dreiwege-Mischventil (465) umfassen, wobei der besagte Sekundärkreislauf (4) einen weiteren Entnahmeabschnitt (49) umfasst, der ein Rückschlagventil (490) umfasst und in flüssiger Verbindung zwischen dem besagten Entnahmeabschnitt (41) und einem Einlass (B2) des besagten Dreiwege-Mischventils (465) steht, wobei der Auslass des besagten Wärmetauschabschnitts (42) in flüssiger Verbindung mit mindestens einem Zwischeneinlassabschnitt (44') steht, und wobei das besagte Dreiwege-Umleitungs-Entnahmeventil (464) einen ersten Einlass (C1) in flüssiger Verbindung mit dem besagten Entnahmeabschnitt (41) umfasst, einen zweiten Einlass (B1) in flüssiger Verbindung mit dem besagten Rezirkulationsabschnitt (47) und einen Auslass (A1) in flüssiger Verbindung mit dem Einlass des besagten Wärmetauschabschnitts (42) umfasst; und das besagte Dreiwege-Mischventil (465) umfasst:
Einen ersten Einlass (B2), der über den besagten weiteren Entnahmeabschnitt (49) in flüssiger Verbindung mit dem besagten Entnahmeabschnitt (41) steht, einen zweiten Einlass (A2), der in flüssiger Verbindung mit dem Auslass des besagten Wärmetauscherabschnitts (42) steht, und einen Auslass (AB2), der in flüssiger Verbindung mit dem besagten Rückführungsabschnitt (47) steht, und wenn sich der besagte Sekundärkreislauf (4) in der besagten ersten Konfiguration befindet, das besagte Dreiwege-Umleitungs-Entnahmeventil (464) den besagten ersten Einlass (C1) geschlossen, den besagten zweiten Einlass (B1) offen und den besagten Auslass (A1) offen hat, und das besagte Dreiwege-Mischventil (465) den besagten Auslass (AB2) offen hat und so konfiguriert ist, dass es den besagten ersten Einlass (A2) ganz oder teilweise öffnet und den besagten zweiten Einlass (B2) proportional zur Öffnung des besagten ersten Einlasses (A2) ganz oder teilweise schließt und umgekehrt, entsprechend der von der besagten weiteren Temperaturerfassungseinrichtung erfassten Temperatur, um das von dem besagten Entnahmeabschnitt (41) kommende besagte Sekundärfluid mit dem von dem besagten Auslass des besagten Wärmeaustauschabschnitts (42) kommenden besagten erwärmten Sekundärfluid zu mischen; und wenn sich der besagte Sekundärkreislauf (4) in der besagten zweiten Konfiguration befindet, hat das besagte Dreiwege-Umleitungs-Entnahmeventil (464) den besagten ersten Einlass (C1) offen und den besagten zweiten Einlass (B1) geschlossen, um den besagten Rückführungsabschnitt (47) zu schließen und zu verhindern, dass das Sekundärfluid durch das besagte Dreiwege-Mischventil (465) fließt, und das besagte Rückschlagventil (490) verhindert, dass das Sekundärfluid durch den besagten weiteren Entnahmeabschnitt (49) strömt und das Sekundärfluid möglicherweise von dem besagten ersten Einlass (A2) des besagten Mischventils (465) zu dem besagten ersten Einlass (C1) des besagten Umleitungsventils (464) zurückgeführt wird.

14. Wärmeaustauschsystem (1) nach Anspruch 7 und einem der Ansprüche 10 bis 12, **dadurch gekennzeichnet, dass** der besagte Entnahmeabschnitt (41) mit dem besagten zweiten Endabschnitt (22; 21) des besagten Tanks (2) durch die besagte zweite innere Leitung (7) in flüssiger Verbindung steht.

15. Wärmeaustauschsystem (1) nach einem der vorhergehenden Ansprüche, **dadurch gekennzeichnet, dass** es Diffusormittel (9) umfasst, die mit dem Ende der besagten ersten inneren Leitung (6) verbunden sind und im besagten Tank (2) im besagten Zwischenabschnitt (23) an dem besagten mindestens einen Einlassabschnitt (44; 44') angeordnet sind, um die Diffusion und die thermische Schichtung im besagten ersten Volumen (V1; V2) des in den Tank (2) eingeleiteten Sekundärfluids zu gewährleisten.

16. Wärmeaustauschsystem (1) nach einem der vorhergehenden Ansprüche, **dadurch gekennzeichnet, dass** der besagten Tank (2) mindestens zwei Zwischenabschnitte (23) auf jeweiligen Zwischenhöhen (H1) umfasst, wobei der besagte Sekundärkreislauf (4) Temperaturerfassungsmittel (45) umfasst, die auf jeder Zwischenhöhe (H1) angeordnet sind, und einen jeweiligen Einlassabschnitt (44; 44') umfasst, der auf jeder Zwischenhöhe (H1) angeordnet ist, um das besagte Sekundärfluid im besagten Tank durch Mehrfachschichtung zu erwärmen oder zu kühlen.

17. Wärmetauschersystem (1) nach einem der vorhergehenden Ansprüche, **dadurch gekennzeichnet, dass** der besagte Wärmetauscher (3) einen primären Kreislauf für ein primäres Wärmeübertragungsfluid umfasst, wobei der besagte primäre Kreislauf in thermischer Verbindung mit dem besagten Wärmetauscherabschnitt (42) zum Erhitzen oder Kühlen des besagten sekundären Fluids im besagten Wärmetauscher (3) steht, und einen Strömungssensor (F) im besagten primären Kreislauf umfasst, wobei der besagte Strömungssensor (F) so konfiguriert ist, dass er das Vorhandensein einer Strömung des besagten primären Wärmeübertragungsfluids im besagten primären Kreislauf erfasst und die Strömung des besagten sekundären Fluids im besagten sekundären Kreislauf (4) unterbricht, wenn die Strömung des besagten primären Fluids im besagten primären Kreislauf nicht vorhanden ist.

18. Wärmetauschersystem (1) nach einem der vorhergehenden Ansprüche, **dadurch gekennzeichnet, dass** der besagte Wärmetauscher (3) mit einem Wärmeerzeuger, vorzugsweise einem Wärmepumpen-Wärmeerzeuger, verbunden ist.

19. Verfahren zur thermischen Schichtung eines Sekundärfluids in einem Tank (2) des Wärmeaustauschsystems (1) nach einem der Ansprüche 1 bis 18, wobei das besagte Sekundärfluid mindestens ein erstes Volumen (V1; V2) und ein zweites Volumen (V2; V1) des besagten Tanks (2) einnimmt, wobei das besagte erste Volumen (V1; V2) und das zweite Volumen (V2; V1) an einem Zwischenabschnitt (23) des besagten Tanks (2), der auf einer Zwischenhöhe (H1) angeordnet ist, in flüssigen Kontakt miteinander stehen, wobei das besagte Verfahren die folgenden Schritte umfasst:
A. entnahme des zu erwärmenden oder zu kühlenden Sekundärfluids aus dem besagten Tank (2) und Erwärmung oder Kühlung mittels eines Wärmetauschers (3);
B. erfassen der Temperatur des Sekundärfluids im besagten Tank (2) in einer ersten Erfassungshöhe (S1) mittels einer Temperaturerfassungseinrichtung (45), und, wenn die Temperatur des Sekundärfluids in der besagten ersten Erfassungshöhe (S1) eine erste voreingestellte Temperatur (T1) nicht erreicht hat, einleiten des erwärmten oder gekühlten Sekundärfluids in den besagten Tank (2), so dass das besagte erste Volumen (V1; V2) des besagten Sekundärfluids im besagten Tank (2) in geschichteter Weise erwärmt oder gekühlt wird;
C. erfassen der Temperatur des Sekundärfluids in der besagten ersten Erfassungshöhe (S1) mittels Temperaturerfassungsmitteln (45), und, wenn die Temperatur des Sekundärfluids in der besagten ersten Erfassungshöhe (S1) die besagte erste voreingestellte Temperatur (T1) erreicht hat, Einleiten des Sekundärfluids in den besagten Tank (2) in der besagten Zwischenhöhe (H1), so dass das besagte zweite Volumen (V2; V1) des besagten Sekundärfluids im besagten Tank (2) allmählich in einer geschichteten Weise erwärmt oder abgekühlt wird.

20. Verfahren nach dem vorhergehenden Anspruch zum Erwärmen des besagten Sekundärfluids, **dadurch gekennzeichnet, dass** das besagte Sekundärfluid mittels des besagten Wärmetauschers (3) erwärmt wird; im besagten Schritt B. wird, wenn die Temperatur des Sekundärfluids in der besagten ersten Erfassungshöhe (S1) geringer ist als die besagte erste voreingestellte Temperatur (T1), das erwärmte Sekundärfluid in den besagten Tank (2) eingeleitet, so dass das besagte erste Volumen (V1) des besagten Sekundärfluids im besagten Tank (2) auf eine besagte erste Erwärmungstemperatur erwärmt wird, die größer oder gleich der besagten ersten voreingestellten Temperatur (T1) ist, wobei das besagte erste Volumen (V1) oberhalb der besagten Zwischenhöhe (H1) angeordnet ist; und im besagten Schritt C. wird, wenn die Temperatur des Sekundärfluids in der besagten ersten Erfassungshöhe (S1) größer oder gleich der besagten ersten voreingestellten Temperatur (T1) ist, das erwärmte Sekundärfluid in den besagten Tank (2) in der besagten Zwischenhöhe (H1) eingeleitet, so dass das besagte zweite Volumen (V2) des besagten Sekundärfluids im besagten Tank (2) allmählich erwärmt wird, bis eine endgültige Erwärmungstemperatur (Tf) erreicht worden ist, wobei das besagte zweite Volumen (V2) unterhalb der besagten Zwischenhöhe (H1) angeordnet ist.

21. Verfahren nach dem vorhergehenden Anspruch, **dadurch gekennzeichnet, dass** die endgültige Erwärmungstemperatur (Tf) kleiner oder gleich der besagten ersten voreingestellten Temperatur (T1) ist, vorzugsweise gleich dieser, und dadurch, dass im besagten Schritt B. das Sekundärfluid in den besagten Tank (2) an einem oberen Abschnitt (21) des besagten Tanks (210), vorzugsweise an der Oberseite (210) des besagten Tanks (2), eingeleitet wird.

22. Verfahren nach einem der Ansprüche 20 bis 21, **dadurch gekennzeichnet, dass** der besagte Schritt A. die folgenden Teilschritte umfasst:
A1. wenn die Temperatur des besagten Sekundärfluids in der besagten ersten Erfassungshöhe (S1) niedriger als die besagte erste voreingestellte Temperatur (T1) ist, Entnahme des besagten zu erwärmenden Sekundärfluids in der besagten Zwischenhöhe (H1); und
A2. wenn die Temperatur des besagten Sekundärfluids in der besagten ersten Erfassungshöhe (S1) größer oder gleich der besagten ersten voreingestellten Temperatur (T1) ist, Entnahme des besagten zu erwärmenden Sekundärfluids in einem unteren Bereich (22) des besagten Tanks, vorzugsweise am Boden (220) des besagten Tanks (2).

23. Verfahren nach einem der Ansprüche 20 bis 22, **dadurch gekennzeichnet, dass** im Schritt A. die folgenden Teilschritte vorgesehen sind:
A3. vor dem besagten Schritt B., wenn die Temperatur des durch den besagten Wärmetauscher (3) erwärmten Sekundärfluids unter einer zweiten voreingestellten Temperatur (T2) liegt, wobei die besagte zweite voreingestellte Temperatur (T2) größer oder gleich der besagten ersten voreingestellten Temperatur (T1) ist, wird das besagte erwärmte Sekundärfluid in den besagten Wärmetauscher (3) zurückgeführt, und
A4. gleichzeitig mit dem besagten Schritt B., wenn die Temperatur des durch den besagten Wärmetauscher (3) erwärmten Sekundärfluids größer oder gleich der besagten zweiten voreingestellten Temperatur (T2) ist, mindestens ein Teil des besagten erwärmten Sekundärfluids in den besagten Tank (2) eingeleitet wird und der verbleibende Teil des besagten erwärmten Sekundärfluids in den besagten Wärmetauscher (3) zurückgeführt wird; und dadurch, dass,
A5. wenn die Temperatur des Sekundärfluids in der besagten ersten Erfassungshöhe (S1) größer oder gleich der besagten ersten voreingestellten Temperatur (T1) ist, das besagte erwärmte Sekundärfluid nicht in den besagten Wärmetauscher (3) zurückgeführt und vollständig in den besagten Tank (2) eingeleitet wird.

24. Verfahren nach Anspruch 19 zum Kühlen des besagten Sekundärfluids, wobei das besagte Sekundärfluid mittels des besagten Wärmetauschers (3) gekühlt wird; im besagten Schritt B., wenn die Temperatur des Sekundärfluids in der besagten ersten Erfassungshöhe (S1) größer als die besagte erste voreingestellte Temperatur (T1) ist, wird das gekühlte Sekundärfluid in den besagten Tank (2) eingeleitet, so dass das besagte erste Volumen (V2) des besagten Sekundärfluids im besagten Tank (2) allmählich auf eine erste Kühltemperatur abgekühlt wird, die kleiner oder gleich der besagten ersten voreingestellten Temperatur (T1) ist, wobei das besagte erste Volumen (V2) unterhalb der besagten Zwischenhöhe (H1) angeordnet ist; und im besagten Schritt C., wenn die Temperatur des Sekundärfluids in der besagten ersten Erfassungshöhe (S1) kleiner oder gleich der besagten ersten voreingestellten Temperatur (T1) ist, das besagte gekühlte Sekundärfluid in den besagten Tank (2) in der besagten Zwischenhöhe (H1) eingeleitet wird, so dass das besagte zweite Volumen (V1) des besagten Sekundärfluids im besagten Tank (2) allmählich abgekühlt wird, bis eine endgültige Kühltemperatur (Tf) erreicht ist, wobei das besagte zweite Volumen (V1) oberhalb der besagten Zwischenhöhe (H1) angeordnet ist.

25. Verfahren nach dem vorhergehenden Anspruch, **dadurch gekennzeichnet, dass** die besagte endgültige Kühltemperatur (Tf) größer oder gleich der besagten ersten voreingestellten Temperatur (T1), vorzugsweise gleich dieser, ist, und dadurch, dass während des besagten Schritts B. das Sekundärfluid in den besagten Tank (2) an einem unteren Abschnitt (22) des besagten Tanks (2), vorzugsweise am Boden (220) des besagten Tanks (2), eingeleitet wird.

26. Verfahren nach einem der Ansprüche 24 bis 25, **dadurch gekennzeichnet, dass** der besagte Schritt A. die folgenden Teilschritte umfasst:
A1. wenn die Temperatur des besagten Sekundärfluids in der besagten ersten Erfassungshöhe (S1) größer ist als die besagte erste voreingestellte Temperatur (T1), Entnahme des besagten zu kühlenden Sekundärfluids in der besagten Zwischenhöhe (H1); und
A2. wenn die Temperatur des besagten Sekundärfluids in der besagten ersten Erfassungshöhe (S1) kleiner oder gleich der besagten ersten voreingestellten Temperatur (T1) ist, Entnahme des besagten zu kühlenden Sekundärfluids an einem oberen Teil (21) des besagten Tanks, vorzugsweise am oberen Ende (210) des besagten Tanks.

27. Verfahren nach einem der Ansprüche 19-26, **dadurch gekennzeichnet, dass** das besagte, Sekundärfluid mittels eines Wärmetauschers (3) erwärmt oder gekühlt wird, der einen Primärkreislauf für ein primäres Wärmeträgerfluid umfasst, und dass es vor den Schritten A. - C. den folgenden Schritt umfasst:
D. Prüfen des Vorhandenseins des primären Wärmeträgerfluids im besagten Primärkreislauf und, falls vorhanden, Fortfahren mit dem Erhitzen oder Kühlen des besagten Sekundärfluids.

## Revendications

1. Un système d'échange thermique (1) pour la stratification thermique d'un fluide secondaire à l'intérieur d'un réservoir (2), ledit système d'échange thermique (1) comprenant: un réservoir fermé (2) pour ledit fluide secondaire ayant deux parois d'extrémité (210; 220), opposées l'une à l'autre, à l'intérieur dudit réservoir (2) au moins deux parties d'extrémité (21, 22) étant prévues, y compris une première partie d'extrémité (21; 22) à une première (210; 220) de ces deux premières parois d'extrémité (210, 220), une deuxième partie d'extrémité (22; 21) à une seconde (220; 210) desdites deux parois d'extrémité (210, 220) et au moins une partie intermédiaire (23) disposée à une hauteur intermédiaire (H1) dudit réservoir (2) de manière à diviser ledit réservoir en au moins deux volumes (V1, V2), dont un premier volume (V1; V2) compris entre ladite première partie d'extrémité (21; 22) et ladite partie intermédiaire (23) et un second volume (V2; V1) compris entre ladite seconde partie d'extrémité (22; 21) et ladite partie intermédiaire (23); un échangeur thermique (3) pour chauffer ou refroidir ledit fluide secondaire, et un circuit secondaire (4), pour faire circuler ledit fluide secondaire depuis ledit réservoir (2) vers ledit échangeur thermique (3) et vice versa, dans lequel ledit circuit secondaire (4) comprend: au moins une portion de soutirage (41', 41"; 41) en liaison fluidique avec ledit réservoir (2), pour soutirer ledit fluide secondaire contenu dans ledit réservoir (2), au moins une portion d'admission intermédiaire (44; 44'), en liaison fluidique avec ledit réservoir (2) à ladite hauteur intermédiaire (H1), pour introduire ledit fluide secondaire dans ledit réservoir (2), une portion d'échange thermique (42), comprenant une entrée en liaison fluidique avec ladite au moins une portion de soutirage (41', 41"; 41) et une sortie en liaison fluidique avec ladite portion intermédiaire d'admission (44; 44'), ladite portion d'échange thermique (42) étant apte à effectuer un échange thermique avec ledit échangeur thermique (3), pour chauffer ou refroidir ledit fluide secondaire, des moyens de détection de température (45), disposés dans ledit réservoir (2) à une hauteur de détection (S1), de préférence au niveau de ladite portion intermédiaire (23), et des moyens de contrôle de débit (460, 461; 462, 461, 463; 462, 466; 464, 465) à l'intérieur dudit circuit secondaire (4), lesdits moyens de contrôle de flux (460, 461; 462, 461, 463; 462, 466; 464, 465) étant configurés pour agir sur ledit circuit secondaire (4) en fonction de la température détectée par lesdits moyens de détection de température (45) pour passer d'une première configuration de chauffage ou de refroidissement stratifié dudit fluide secondaire dans ledit premier volume (V1; V2) à une seconde configuration de chauffage ou de refroidissement stratifié dudit fluide secondaire dans ledit second volume (V2; V1), ledit système d'échange thermique (1) étant **caractérisé en ce que** ledit circuit secondaire (4) comprend en outre un premier conduit interne (6) qui relie fluidiquement ladite partie d'échange thermique (42) à ladite partie d'admission intermédiaire (44; 44'), ledit premier conduit interne (6) étant disposé à l'intérieur dudit réservoir (2), partant d'une première paroi d'extrémité (210; 220) dudit réservoir (2) et aboutissant à ladite hauteur intermédiaire (H1).

2. Un système d'échange thermique (1) selon la revendication 1, **caractérisé en ce que** ledit premier volume (V1; V2) est un volume supérieur (V1) dudit réservoir (2) et ledit second volume (V2; V1) est un volume inférieur (V2) dudit réservoir (2), ladite hauteur de détection (S1) coïncide avec ladite hauteur intermédiaire (H1) ou est au-dessus de celle-ci, et lesdits moyens de contrôle de flux (460, 461; 462, 461, 463; 462, 466; 464, 465) sont adaptés pour agir sur ledit circuit secondaire (4) en fonction de la température détectée par lesdits moyens de détection de température (45) pour passer d'une première configuration de chauffage stratifié dudit fluide secondaire dans ledit volume supérieur (V1) à une seconde configuration de chauffage stratifié dudit fluide secondaire dans ledit volume inférieur (V2).

3. Un système d'échange thermique (1) selon la revendication 1, **caractérisé en ce que** ledit premier volume (V1; V2) est un volume inférieur (V2) dudit réservoir (2) et ledit second volume (V2; V1) est un volume supérieur (V1) dudit réservoir (2), ladite première hauteur de détection (S1) coïncide avec ladite hauteur intermédiaire (H1) ou lui est inférieure, et lesdits moyens de contrôle de flux (460, 461) sont adaptés pour agir sur ledit circuit secondaire (4) en fonction de la température détectée par lesdits moyens de détection de température (45) pour passer d'une première configuration de refroidissement stratifié dudit fluide secondaire dans ledit volume inférieur (V2) à une seconde configuration de refroidissement stratifié dudit fluide secondaire dans ledit volume supérieur (V1).

4. Le système d'échange thermique (1) selon l'une quelconque des revendications précédentes, **caractérisé en ce que** ledit circuit secondaire (4) comprend une première portion d'admission (43) en liaison fluidique avec ledit réservoir (2) au niveau de ladite première portion d'extrémité (21; 22) dudit réservoir (2), et ladite portion d'admission intermédiaire (44), et **en ce que** lesdits moyens de contrôle de débit (460, 461; 462, 461, 463) comprennent une vanne d'admission à trois voies de dérivation (461) comprenant une entrée (A1) en liaison fluidique avec la sortie de ladite partie d'échange thermique (42) pour recevoir le fluide secondaire chauffé ou refroidi provenant dudit échangeur thermique (3), une première sortie (B1) pour ledit fluide secondaire chauffé ou refroidi, en liaison fluidique avec ladite première partie d'admission (43), et une seconde sortie (C1) pour ledit fluide secondaire chauffé ou refroidi, en connexion fluidique avec ladite partie d'admission intermédiaire (44), et **en ce que** lorsque ledit circuit (4) est dans ladite première configuration, ladite vanne d'admission à trois voies de dérivation (461) a ladite entrée (A1) ouverte, ladite première sortie (B1) ouverte et ladite deuxième sortie (C1) fermée et lorsque ledit circuit (4) est dans ladite deuxième configuration, ladite vanne d'admission à trois voies de dérivation (461) a ladite entrée (A1) ouverte, ladite première sortie (B1) fermée et ladite deuxième sortie (C1) ouverte.

5. Le système d'échange thermique (1) selon l'une quelconque des revendications précédentes, **caractérisé en ce que** ledit circuit secondaire (4) comprend en outre un second conduit interne (7; 8) disposé à l'intérieur dudit réservoir (2) et aboutissant à ladite première paroi d'extrémité (210; 220), ledit second conduit interne (7; 8) reliant fluidiquement ladite seconde partie d'extrémité (22; 21) dudit réservoir (2) à ladite partie d'échange thermique (42) .

6. Un système d'échange thermique (1) selon la revendication précédente, **caractérisé en ce que** ledit second conduit interne (8) relie fluidiquement ladite seconde partie d'extrémité (22) dudit réservoir (2) à ladite sortie de ladite partie d'échange thermique (42) .

7. Un système d'échange thermique (1) selon la revendication 5, **caractérisé en ce que** ledit second conduit interne (7) relie fluidiquement ladite seconde partie d'extrémité (22; 21) dudit réservoir (2) à ladite entrée de ladite partie d'échange thermique (42) .

8. Le système d'échange thermique (1) selon l'une quelconque des revendications précédentes est **caractérisé en ce que** ledit circuit secondaire (4) comprend en outre une première partie de soutirage (41'), en liaison fluidique avec ledit réservoir (2) à travers ledit conduit interne (6) au niveau de ladite partie intermédiaire (23); il comprend aussi une seconde partie de soutirage (41"), en liaison fluidique avec ledit réservoir (2) au niveau de ladite seconde partie d'extrémité (22; 21) dudit réservoir (2). Lesdits moyens de contrôle de débit (460, 461) comprennent une vanne de soutirage à trois voies de dérivation (460) comprenant une première entrée (A2) en liaison fluidique avec ladite première portion de soutirage (41'), une deuxième entrée (B2) en liaison fluidique avec ladite deuxième portion de soutirage (41"), et une sortie (C2) en liaison fluidique avec l'entrée de ladite portion d'échange thermique (42), en outre lorsque ledit circuit (4) est dans ladite première configuration, ladite vanne de prélèvement à trois voies (460) a ladite sortie (C2) ouverte, ladite première entrée (A2) est ouverte et ladite seconde entrée (B2) est fermée et lorsque ledit circuit (4) est dans ladite seconde configuration, ladite vanne de prélèvement à trois voies (460) a ladite sortie (C2) ouverte, ladite première entrée (A2) est fermée et ladite seconde entrée (B2) est ouverte.

9. Le système d'échange thermique (1) selon la revendication précédente est **caractérisé en ce que** ledit premier conduit interne (6) relie ladite partie intermédiaire (23) dudit réservoir (2) également à ladite première partie de retrait (41').

10. Le système d'échange thermique (1) selon la revendication 2 ou selon les revendications 2 et 4, **caractérisé en ce que** ledit circuit secondaire (4) ne comprend qu'une portion de prélèvement (41) disposée au niveau de ladite portion d'extrémité (22), au moins une portion de recirculation (47) pour la recirculation dudit fluide secondaire entre la sortie de ladite portion d'échange thermique (42) et l'entrée de ladite portion d'échange thermique (42); et d'autres moyens de détection de la température, pour détecter la température dudit fluide secondaire sortant de ladite partie d'échange thermique (42), lesdits autres moyens de détection de la température étant configurés pour que, lorsque ledit circuit secondaire (4) est dans ladite première configuration, ledit fluide secondaire sortant de ladite partie d'échange thermique (42) soit envoyé, au moins en partie, vers ladite entrée de ladite partie d'échange thermique (42), en passant par ladite partie de recirculation (47), en fonction de la température détectée à l'aide desdits autres moyens de détection de la température.

11. Un système d'échange thermique (1) selon la revendication précédente, **caractérisé en ce que** lesdits moyens de contrôle du débit (462, 461, 463; 462, 466) comprennent une vanne de mélange à trois voies (462), dans lequel ladite portion de recirculation (47) est en connexion fluidique avec ladite première portion d'admission (43), dans lequel lesdits moyens de contrôle du débit (461; 462) contrôlent l'écoulement du fluide depuis ladite partie d'échange thermique (42) vers lesdites parties d'admission (43) et de recirculation (47), et dans lequel ladite première partie d'admission (43) comprend un clapet antiretour (431) en aval de la connexion avec ladite partie de recirculation (47) pour empêcher le retrait du fluide secondaire dudit réservoir (2), et dans lequel ladite vanne de mélange à trois voies (462) comprend une première entrée (A2) en connexion fluidique avec ladite partie de recirculation (47), une deuxième entrée (B2) en connexion fluidique avec ladite partie de prélèvement (41), et une sortie (AB2) en liaison fluidique avec l'entrée de ladite portion d'échange thermique (42), et **en ce que**, lorsque ledit circuit secondaire (4) est dans ladite première configuration, ladite vanne de mélange à trois voies (462) est configurée pour ouvrir totalement ou partiellement ladite première entrée (A2) et pour fermer totalement ou partiellement ladite deuxième entrée (B2) proportionnellement à l'ouverture de ladite première entrée (A2) et vice-versa, en fonction de la température détectée par lesdits autres moyens de détection de température, de manière à mélanger ledit fluide secondaire provenant de ladite portion de soutirage (41) avec ledit fluide secondaire chauffé provenant de ladite portion de recirculation (47); et lorsque ledit circuit secondaire (4) est dans ladite seconde configuration, lesdites portions de recirculation (47) et d'admission (43) sont fermées par l'action desdits moyens de contrôle du débit (461; 462) et au moyen dudit clapet antiretour (431) qui empêche le fluide secondaire de s'écouler dudit réservoir (2) vers ladite première entrée (A2), de manière à empêcher le fluide de pénétrer dans ladite vanne de mélange à trois voies (462) par ladite première entrée (A2).

12. Un système d'échange thermique (1) selon la revendication précédente, **caractérisé en ce que** ledit circuit secondaire (4) comprend une vanne de dérivation (463) en liaison fluidique avec ladite partie de soutirage (43) et l'entrée de ladite partie d'échange thermique (42) et **en ce que** lorsque ledit circuit secondaire (4) est dans ladite première configuration, ladite vanne de dérivation (463) est fermée de sorte que ledit fluide secondaire ne puisse pas la traverser, et lorsque ledit circuit secondaire (4) est dans ladite deuxième configuration, ladite vanne de dérivation (463) est ouverte de sorte que ledit fluide secondaire peut la traverser en contournant ladite vanne de mélange à trois voies (462).

13. Le système d'échange thermique (1) selon les revendications 2 et 10, **caractérisé en ce que** lesdits moyens de contrôle du débit comprennent une vanne de prélèvement à trois voies (464) et une vanne de mélange à trois voies (465), dans lequel ledit circuit secondaire (4) comprend une autre partie de prélèvement (49), comprenant un clapet antiretour (490), en connexion fluidique entre ladite partie de prélèvement (41) et une entrée (B2) de ladite vanne de mélange à trois voies (465), dans laquelle la sortie de ladite partie d'échange thermique (42) est en connexion fluidique avec au moins une partie d'admission intermédiaire (44'), et dans laquelle ladite vanne de prélèvement à trois voies (464) comprend une première entrée (C1) en connexion fluidique avec ladite partie de prélèvement (41), une deuxième entrée (B1) en connexion fluidique avec ladite partie de recirculation (47), et une sortie (A1) en connexion fluidique avec l'entrée de ladite partie d'échange thermique (42); et ladite vanne de mélange à trois voies (465) comprend une première entrée (B2) en connexion fluidique avec ladite partie de prélèvement (41) à travers ladite autre partie de prélèvement (49); une deuxième entrée (A2) en connexion fluidique avec la sortie de ladite partie d'échange thermique (42) et une sortie (AB2) en connexion fluidique avec ladite partie de recirculation (47); et **en ce que** lorsque ledit circuit secondaire (4) est dans ladite première configuration, ladite vanne de prélèvement à trois voies de dérivation (464) a ladite première entrée (C1) fermée, ladite deuxième entrée (B1) ouverte et ladite sortie (A1) ouverte, et ladite vanne de mélange à trois voies (465) a ladite sortie (AB2) ouverte et est configurée pour ouvrir totalement ou partiellement ladite première entrée (A2) et pour fermer totalement ou partiellement ladite deuxième entrée (B2) proportionnellement à l'ouverture de ladite première entrée (A2) et vice-versa, en fonction de la température détectée par ledit autre moyen de détection de température, de manière à mélanger ledit fluide secondaire provenant de ladite partie de soutirage (41) avec ledit fluide secondaire chauffé provenant de ladite sortie de ladite partie d'échange thermique (42); et lorsque ledit circuit secondaire (4) est dans ladite seconde configuration, ladite vanne de prélèvement à trois voies (464) a sa première entrée (C1) ouverte et sa seconde entrée (B1) fermée, de manière à fermer ladite portion de recirculation (47) et à empêcher le fluide secondaire de s'écouler à travers ladite vanne de mélange à trois voies (465), et ledit clapet antiretour (490) empêche le fluide secondaire de s'écouler à travers ladite portion de prélèvement supplémentaire (49) et le fluide secondaire d'être éventuellement recirculé de ladite première entrée (A2) de ladite vanne de mélange (465) vers ladite première entrée (C1) de ladite vanne de dérivation (464).

14. Un système d'échange thermique (1) selon la revendication 7 et l'une quelconque des revendications 10 - 12, **caractérisé par le fait que** ladite partie de retrait (41) est en liaison fluidique avec ladite deuxième partie d'extrémité (22; 21) dudit réservoir (2) par l'intermédiaire dudit deuxième conduit interne (7).

15. Le système d'échange thermique (1) selon l'une quelconque des revendications précédentes, **caractérisé en ce qu'**il comprend des moyens de diffusion (9), reliés à l'extrémité terminale dudit premier conduit interne (6), disposés dans ledit réservoir (2) dans ladite partie intermédiaire (23) au niveau de ladite au moins une partie d'admission (44; 44'), pour la diffusion et la stratification thermique dans ledit premier volume (V1; V2) du fluide secondaire introduit dans ledit réservoir (2).

16. Le système d'échange thermique (1) selon l'une quelconque des revendications précédentes, **caractérisé en ce que** ledit réservoir (2) comprend au moins deux parties intermédiaires (23) à des hauteurs intermédiaires respectives (H1), dans lequel ledit circuit secondaire (4) comprend des moyens de détection de température (45) disposés à chaque hauteur intermédiaire (H1) et une partie d'admission respective (44; 44'), disposée à chaque hauteur intermédiaire (H1), pour chauffer ou refroidir ledit fluide secondaire dans ledit réservoir au moyen d'une stratification multiple.

17. Le système d'échange thermique (1) selon l'une quelconque des revendications précédentes, est **caractérisé en ce que** ledit échangeur thermique (3) comprend un circuit primaire pour un fluide caloporteur primaire, ledit circuit primaire étant en connexion thermique avec ladite partie d'échange thermique (42) pour chauffer ou refroidir ledit fluide secondaire dans ledit échangeur thermique (3), et **en ce qu'**il comprend un capteur de débit (F) dans ledit circuit primaire, ledit capteur de débit (F) étant configuré pour détecter la présence d'un débit dudit fluide caloporteur primaire dans ledit circuit primaire et pour interrompre le débit dudit fluide secondaire dans ledit circuit secondaire (4) en cas d'absence de débit dudit fluide primaire dans ledit circuit primaire.

18. Le système d'échange thermique (1) selon l'une quelconque des revendications précédentes, **caractérisé en ce que** ledit échangeur thermique (3) est relié à un générateur thermique, de préférence un générateur thermique à pompe à chaleur.

19. Un procédé de stratification thermique d'un fluide secondaire à l'intérieur d'un réservoir (2) du système d'échange thermique (1) selon l'une quelconque des revendications 1 à 18, dans lequel ledit fluide secondaire occupe au moins un premier volume (V1; V2) et un second volume (V2; V1) dudit réservoir (2), ledit premier volume (V1; V2) et second volume (V2; V1) étant en contact fluidique l'un avec l'autre au niveau d'une partie intermédiaire (23) dudit réservoir (2) agencée à une hauteur intermédiaire (H1), dans lequel ledit procédé comprend les étapes suivantes:
A. prélever le fluide secondaire à chauffer ou à refroidir dans ledit réservoir (2) et le chauffer ou le refroidir au moyen d'un échangeur thermique (3);
B. détecter la température du fluide secondaire dans ledit réservoir (2) à une première hauteur de détection (S1) au moyen des moyens de détection de la température (45), et si la température du fluide secondaire à ladite première hauteur de détection (S1) n'a pas atteint une première température prédéfinie (T1), introduire le fluide secondaire chauffé ou refroidi dans ledit réservoir (2), de sorte que ledit premier volume (V1; V2) dudit fluide secondaire dans ledit réservoir (2) soit chauffé ou refroidi de manière stratifiée;
C. détecter la température du fluide secondaire à ladite première hauteur de détection (S1) au moyen des moyens de détection de température (45), et, si la température du fluide secondaire à ladite première hauteur de détection (S1) a atteint ladite première température préréglée (T1), introduire le fluide secondaire dans ledit réservoir (2) à ladite hauteur intermédiaire (H1), de sorte que ledit second volume (V2; V1) dudit fluide secondaire dans ledit réservoir (2) soit progressivement chauffé ou refroidi de manière stratifiée.

20. Un procédé selon la revendication précédente pour chauffer ledit fluide secondaire, **caractérisé en ce que** ledit fluide secondaire est chauffé au moyen dudit échangeur thermique (3); dans ladite étape B. si la température du fluide secondaire à ladite première hauteur de détection (S1) est inférieure à ladite première température prédéfinie (T1), le fluide secondaire chauffé est introduit dans ledit réservoir (2) de sorte que ledit premier volume (V1) dudit fluide secondaire dans ledit réservoir (2) est chauffé à une première température de chauffage, supérieure ou égale à ladite première température prédéfinie (T1), ledit premier volume (V1) étant disposé au-dessus de ladite hauteur intermédiaire (H1); et dans ladite étape C., si la température du fluide secondaire à ladite première hauteur de détection (S1) est supérieure ou égale à ladite première température préréglée (T1), le fluide secondaire chauffé est introduit dans ledit réservoir (2) à ladite hauteur intermédiaire (H1), de sorte que ledit deuxième volume (V2) dudit fluide secondaire dans ledit réservoir (2) est progressivement chauffé jusqu'à ce qu'une température finale de chauffage (Tf) soit atteinte, ledit deuxième volume (V2) étant disposé au-dessous de ladite hauteur intermédiaire (H1).

21. Le procédé selon la revendication précédente, **caractérisé en ce que** ladite température finale de chauffage (Tf) est inférieure ou égale à ladite première température préréglée (T1), de préférence égale à celle-ci, et **en ce que**, dans ladite étape B., le fluide secondaire est introduit dans ledit réservoir (2) au niveau d'une partie supérieure (21) dudit réservoir (210), de préférence au sommet (210) dudit réservoir (2).

22. Le procédé selon l'une quelconque des revendications 20 - 21, **caractérisé en ce que** ladite étape A. comprend les sous-étapes suivantes:
A1. Si la température dudit fluide secondaire à ladite première hauteur de détection (S1) est inférieure à ladite première température préréglée (T1), prélever ledit fluide secondaire à chauffer à ladite hauteur intermédiaire (H1); et
A2. Si la température dudit fluide secondaire à ladite première hauteur de détection (S1) est supérieure ou égale à ladite première température préréglée (T1), prélever ledit fluide secondaire à chauffer à une partie inférieure (22) dudit réservoir, de préférence au fond (220) dudit réservoir (2).

23. Le procédé selon l'une quelconque des revendications 20 à 22, **caractérisé par le fait que**, dans ladite étape A., les sous-étapes suivantes sont prévues :
A3. avant ladite étape B., si la température du fluide secondaire chauffé par ledit échangeur thermique (3) est inférieure à une deuxième température préréglée (T2), dans laquelle ladite deuxième température préréglée (T2) est supérieure ou égale à ladite première température préréglée (T1), ledit fluide secondaire chauffé est recirculé dans ledit échangeur thermique (3), et
A4. simultanément à ladite étape B., si la température du fluide secondaire chauffé par ledit échangeur thermique (3) est supérieure ou égale à ladite deuxième température préréglée (T2), au moins une partie dudit fluide secondaire chauffé est introduite dans ledit réservoir (2) et la partie restante dudit fluide secondaire chauffé est recirculée dans ledit échangeur thermique (3); et
A5. lorsque la température du fluide secondaire à ladite première hauteur de détection (S1) est supérieure ou égale à ladite première température prédéfinie (T1), ledit fluide secondaire chauffé n'est pas recirculé dans ledit échangeur thermique (3) et est entièrement introduit dans ledit réservoir (2).

24. Le procédé selon la revendication 19 pour refroidir ledit fluide secondaire, dans lequel ledit fluide secondaire est refroidi au moyen dudit échangeur thermique (3); dans ladite étape B. Si la température du fluide secondaire à ladite première hauteur de détection (S1) est supérieure à ladite première température prédéfinie (T1), le fluide secondaire refroidi est introduit dans ledit réservoir (2) de sorte que ledit premier volume (V2) dudit fluide secondaire dans ledit réservoir (2) est progressivement refroidi à une première température de refroidissement, inférieure ou égale à ladite première température prédéfinie (T1), ledit premier volume (V2) étant disposé sous ladite hauteur intermédiaire (H1); et dans ladite étape C., si la température du fluide secondaire à ladite première hauteur de détection (S1) est inférieure ou égale à ladite première température préréglée (T1), le fluide secondaire refroidi est introduit dans ledit réservoir (2) à ladite hauteur intermédiaire (H1), de sorte que ledit deuxième volume (V1) dudit fluide secondaire dans ledit réservoir (2) est progressivement refroidi jusqu'à ce qu'une température finale de refroidissement (Tf) soit atteinte, ledit deuxième volume (V1) étant disposé au-dessus de ladite hauteur intermédiaire (H1).

25. Un procédé selon la revendication précédente, **caractérisée en ce que** ladite température finale de refroidissement (Tf) est supérieure ou égale à ladite première température préréglée (T1), de préférence égale à celle-ci, et **en ce que** lors de ladite étape B. Le fluide secondaire est introduit dans ledit réservoir (2) au niveau d'une partie inférieure (22) dudit réservoir (2), de préférence au niveau du fond (220) dudit réservoir (2).

26. Le procédé selon l'une quelconque des revendications 24 - 25, **caractérisé en ce que** ladite étape A. comprend les sous-étapes suivantes:
A1. si la température dudit fluide secondaire à ladite première hauteur de détection (S1) est supérieure à ladite première température prédéfinie (T1), prélever ledit fluide secondaire pour le refroidir à ladite hauteur intermédiaire (H1); et
A2. Si la température dudit fluide secondaire à ladite première hauteur de détection (S1) est inférieure ou égale à ladite première température prédéfinie (T1), retirer ledit fluide secondaire pour le refroidir dans une partie supérieure (21) dudit réservoir, de préférence au sommet (210) dudit réservoir.

27. Le procédé selon l'une quelconque des revendications 19 à 26, **caractérisé en ce que** ledit fluide secondaire est chauffé ou refroidi au moyen d'un échangeur thermique (3) comprenant un circuit primaire pour un fluide caloporteur primaire, et **en ce qu'**il comprend l'étape suivante, avant lesdites étapes A. - C.:
D. Vérifier la présence du flux de fluide caloporteur primaire dans ledit circuit primaire et, s'il est présent, procéder au chauffage ou au refroidissement dudit fluide secondaire.
